# EUROPEAN PATENT SPECIFICATION

(11) **EP 4 287 747 B1**
(45) Date of publication and mention of the grant of the patent: **27.08.2025**
(21) Application number: 21923662.7
(22) Date of filing: 02.02.2021
(51) Int. Cl.: H04W 74/0833, H04W 74/0836, H04W 74/0838, H04W 74/00

(54) **RANDOM ACCESS TYPE SELECTION METHOD AND APPARATUS, DEVICE, AND STORAGE MEDIUM**
DIREKTZUGRIFFSAUSWAHLVERFAHREN UND -VORRICHTUNG, VORRICHTUNG UND SPEICHERMEDIUM
PROCÉDÉ ET APPAREIL DE SÉLECTION DE TYPE D'ACCÈS ALÉATOIRE, DISPOSITIF, ET SUPPORT DE STOCKAGE

(43) Date of publication of application: 06.12.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Taor, Simon Edward William
(86) International application number: PCT/CN2021/074847
(87) International publication number: WO 2022/165632

(56) References cited:
- CN-A- 109 845 378
- US-A1- 2019 098 672
- US-A1- 2020 236 719
- QUALCOMM INCORPORATED: "Discussion on candidate solutions of slice-based RACH", vol. RAN WG2, no. E-Conference; 20210125 - 20210205, 15 January 2021 (2021-01-15), XP051973345, Retrieved from the Internet <URL:https://ftp.3gpp.org/tsg_ran/WG2_RL2/TSGR2_113-e/Docs/R2-2100129.zip R2-2100129 - Discussion on candidate solutions of slice-based RACH.doc> [retrieved on 20210115]
- NEC: "RACH enhancements to enable UE fast access to the intended", vol. RAN WG2, no. electronic; 20201102 - 20201113, 23 October 2020 (2020-10-23), XP052363018, Retrieved from the Internet <URL:https://ftp.3gpp.org/tsg_ran/WG2_RL2/TSGR2_112-e/Docs/R2-2009974.zip R2-2009974_RACH enhancements to enable UE fast access to the intended slice.docx> [retrieved on 20201023]
- LENOVO ET AL: "Considerations on RA type selection and switching in NTN", vol. RAN WG2, no. electronic; 20210125 - 20210205, 15 January 2021 (2021-01-15), XP051974122, Retrieved from the Internet <URL:https://ftp.3gpp.org/tsg_ran/WG2_RL2/TSGR2_113-e/Docs/R2-2101125.zip R2-2101125 Considerations on RA type selection and switching in NTN.docx> [retrieved on 20210115]
- HUAWEI, HISILICON: "Slice based RACH configuration or access barring", 3GPP DRAFT; R2-2010182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20201102 - 20201113, 23 October 2020 (2020-10-23), Mobile Competence Centre ; 650, route des Lucioles ; F-06921 Sophia-Antipolis Cedex ; France , XP051942868
- XIAOMI: "Considerations on the solutions of slice based RACH configuration", 3GPP DRAFT; R2-2100424, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20210125 - 20210205, 15 January 2021 (2021-01-15), Mobile Competence Centre ; 650, route des Lucioles ; F-06921 Sophia-Antipolis Cedex ; France , XP051973606

## Description

### TECHNICAL FIELD

Embodiments of the present disclosure relate to the communication technical field, and more specifically, to a random access type selection method and terminal device.

### BACKGROUND

The strong demand for wireless communications in vertical markets is obvious to all. In order to meet the needs of the vertical industries for latency, mobility, reliability, and location accuracy, Radio Access Network (RAN) needs to provide enhancements as to how to support vertical services in the access network. One of the ways is based on network slicing technology, which provides lower latency, more targeted, greater flexibility and higher scalability services for multiple services with different needs. More specifically, RAN slicing technology can enable application providers to participate in the design, deployment and operation of customized RANs, and better support the services of application providers.

After RAN introduces the slicing technology, how to select a random access type for a terminal device is a problem that needs to be studied. 3GPP draft R2-2100129 focuses on slice-based RACH. US20190098672 discloses an apparatus including a processor. The processor is configured to execute the instructions of selecting an optimal downlink transmission beam transmitted by the cell during the downlink sweeping subframe. The processor is also configured to execute the instructions of determining an optimal downlink reception beam from the optimal downlink transmission beam. The processor is further configured to execute the instructions of determining a random access preamble and a physical random access channel (PRACH) resource via resource selection from the optimal downlink transmission beam.

### SUMMARY

According to an aspect of embodiments of the present disclosure, there is provided a random access type selection method, applied to a terminal device, according to claim 1. Further aspects are set out in claims 2 to 6. According to an aspect of embodiments of the present disclosure, there is provided a terminal device according to claim 7.

The technical solutions provided by the embodiments of the present disclosure may include the following beneficial effects:

The present disclosure provides a random access type selection scheme. After the slice-specific random access type is introduced into the communication system, in a case where the network device configures both a legacy random access type (for example, including 2-step legacy random access and/or 4-step legacy random access) and the slice-specific random access type (for example, including 2-step slice-specific random access and/or 4-step slice-specific random access), the technical solutions of the present disclosure provide a selection scheme for the random access type when the terminal device initiates random access, including prioritizing selection of a random access type. The technical solutions of the present disclosure provide guidance for the random access behavior of the terminal device and ensure that the random access is accurately implemented, and are helpful for improving the success rate of random access.

### BRIEF DESCRIPTION OF THE DRAWINGS

FIG. 1 is a schematic diagram of a network architecture provided by an embodiment of the present disclosure;
FIG. 2 is a flowchart of a random access type selection method provided by an embodiment of the present disclosure;
FIG. 3 is a block diagram of a random access type selection apparatus provided by an embodiment of the present disclosure;
FIG. 4 is a block diagram of a random access type selection apparatus provided by another embodiment of the present disclosure;
FIG. 5 is a schematic structural diagram of a terminal device provided by an embodiment of the present disclosure;
FIG. 6 is a schematic structural diagram of a network device provided by an embodiment of the present disclosure.

### DETAILED DESCRIPTION

In order to make the purposes, technical solutions and advantages of the present disclosure clearer, the implementations of the present disclosure will be further described in detail below with reference to the accompanying drawings.

The network architecture and service scenarios described in the embodiments of the present disclosure are for more clearly illustrating the technical solutions of the embodiments of the present disclosure, and do not constitute limitations on the technical solutions provided by the embodiments of the present disclosure. Those skilled in this art will understand that, as the evolution of the network architecture and the emergence of new service scenarios, the technical solutions provided in the embodiments of the present disclosure are also applicable to similar technical problems.

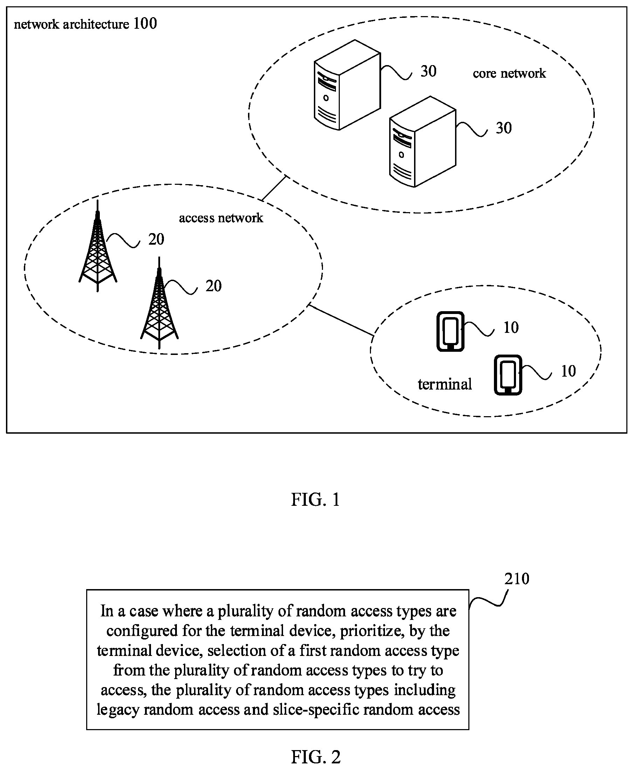

FIG. 1 shows a schematic diagram of a network architecture provided by an embodiment of the present disclosure. The network architecture 100 may include: at least one terminal device 10, at least one access network device 20 and at least one core network device 30.

The terminal device 10 may refer to a UE (User Equipment), an access terminal, a subscriber unit, a subscriber station, a mobile station, a mobile terminal, a remote station, a remote terminal, a mobile device, a wireless communication device, a user agent, or a user device. Optionally, the terminal device 10 may also be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, a vehicle-mounted device, a wearable device, a terminal device in 5GS (5th Generation System, fifth-generation mobile communication system) or a terminal device in a future evolved Public Land Mobile Network (PLMN), etc., and embodiments of the present disclosure do not impose specific limitations on this. For convenience of description, the devices mentioned above are collectively referred to as a terminal device. The at least one terminal device 10 generally includes multiple terminal devices, and one or more terminal devices 10 may be distributed in a cell managed by each access network device 20.

An access network device 20 is a device deployed in an access network to provide a wireless communication function for a terminal device 10. The access network device 20 may include various forms of macro base stations, micro base stations, relay stations, access points, and so on. In systems using different radio access technologies, the name of the device with access network device functions may be different. For example, in a 5G NR (New Radio) system, such device is called gNodeB or gNB. With the evolution of communication technologies, the name "access network device" may change. For the convenience of description, in the embodiments of the present disclosure, the above-mentioned devices that provide the wireless communication functions for the terminal device(s) 10 are collectively referred to as an access network device. Optionally, a communication relationship may be established between the terminal device(s) 10 and the core network device(s) 30 through an access network device 20. Exemplarily, in a Long Term Evolution (LTE) system, the access network device 20 may be Evolved Universal Terrestrial Radio Access Network (EUTRAN) or one or more eNodeBs in EUTRAN. In the 5G NR system, the access network device 20 may be a Radio Access Network (RAN) or one or more gNBs in the RAN. In embodiments of the present disclosure, the network device refers to the access network device 20 unless otherwise specified.

The functions of the core network device 30 are mainly to provide user connections, manage users, and carry out services, and provide an interface to an external network as a bearer network. For example, the core network device in the 5G NR system may include an Access and Mobility Management Function (AMF) entity, a User Plane Function (UPF) entity and a Session Management Function (SMF) entity and other device.

In an example, the access network device(s) 20 and the core network device(s) 30 communicate with each other through a certain air interface technology, such as an NG interface in a 5G NR system. The access network device(s) 20 and the terminal device(s) 10 communicate with each other through a certain air interface technology, such as a Uu interface.

The "5G NR system" in the embodiments of the present disclosure may also be called a 5G system or an NR system, but those skilled in the art can understand its meaning. The technical solutions described in the embodiments of the present disclosure may be applied to the 5G NR system, and may also be applied to a subsequent evolved system of the 5G NR system.

Random access types provided in the current NR system include 2-step random access (2-step RACH type) and 4-step random access (4-step RACH type). After the slicing technology is introduced in RAN, a slice-specific random access type may be added on this basis. Optionally, the slice-specific random access type may also include 2-step random access (referred to as "2-step slice-specific RACH type" in the present disclosure) and 4-step random access (referred to as "4-step slice-specific RACH type" in the present disclosure). Further, in order to make a distinction, the original random access type in the NR system is called a legacy random access type, which includes 2-step legacy random access and 4-step legacy random access.

After the slice-specific random access type is introduced, if the network device configures the legacy random access type (for example, including the 2-step legacy random access and/or the 4-step legacy random access) to the terminal device, and also configures the slice-specific random access type (for example, including the 2-step slice-specific random access and/or the 4-step slice specific random access), how to perform random access type selection when a terminal device initiates random access? The present disclosure aims at solving this technical problem. In the following, the technical solutions of the present disclosure will be described in detail through several embodiments.

FIG. 2 shows a flowchart of a random access type selection provided by an embodiment of the present disclosure. The method includes step 210: in a case where a plurality of random access types are configured for a terminal device, a terminal device prioritizes selection of a first random access type from the plurality of random access types to try to access. The plurality of random access types include legacy random access and slice-specific random access.

Optionally, the first random access type may be one of the foregoing plurality of random access types configured for the terminal device. For example, the first random access type may be slice-specific random access, or the legacy random access.

Further, a network device may configure random access types for the terminal device to select from by sending random access configuration information to the terminal device. For example, the random access configuration information sent by the network device to the terminal device is used to configure a plurality of random access types for the terminal device to select from. For example, the plurality of random access types include the legacy random access and the slice-specific random access.

Optionally, the legacy random access configured for the terminal device may include 2-step legacy random access and/or 4-step legacy random access, and the slice-specific random access configured for the terminal device may include 2-step slice-specific random access and/or 4-step slice-specific random access.

Optionally, the network device indicates to the terminal device which first random access type is used. For example, the network device sends first indication information to the terminal device, where the first indication information is used to indicate to the terminal device which first random access type is used. For example, the first indication information includes an identity of the first random access type. The first indication information may be sent together with the above random access configuration information, or may be sent separately, which is not limited in the present disclosure.

Optionally, the network device indicates to the terminal device which second random access type is used. The second random access type refers to another random access type different from the first random access type that is reselected when an access attempt using the first random access type fails or the maximum number of attempts is reached. For example, the network device sends second indication information to the terminal device, where the second indication information is used to indicate to the terminal device which second random access type is used. For example, the second indication information includes an identity of the second random access type. The second indication information may be sent together with the above random access configuration information, or may be sent separately with the above random access configuration information; or, the second indication information may be sent together with the above first indication information, or may be sent separately with the first indication information, which is not limited in the present disclosure.

Optionally, the network device indicates to the terminal device a default random access type used. The default random access type is used for selection of the first random access type and/or the second random access type. The terminal device may determine the selected first random access type and/or the second random access type according to the default random access type. Taking the default random access type being used for the selection of the first random access type as an example, it is assumed that the default random access type is 2-step slice-specific random access, then the terminal device can preferentially select the default random access type (i.e., 2-step slice-specific random access) try to access. Optionally, the network device may indicate two default random access types to the terminal device, and the two default random access types are two different random access types, and one of the default random access types is used for the selection of the first random access type, and another default random access type is used for the selection of the second random access type. In addition, the network device may send third indication information to the terminal device, where the third indication information is used to indicate to the terminal device the default random access type used. For example, the third indication information includes an identity of the default random access type. In the embodiments of the present disclosure, the sending timing of the third indication information is not limited. For example, the third indication information may be sent together with the above random access configuration information, or may be sent separately with the random access configuration information, or other appropriate timing may be selected for sending.

Optionally, the network device indicates priorities of plurality of random access types to the terminal device. The terminal device may determine the selected first random access type and/or the second random access type according to the priorities of the plurality of random access types. For example, the priorities of the above random access types are (from high to low): 2-step slice-specific random access, 4-step slice-specific random access, 2-step legacy random access, and 4-step legacy random access. A random access with a higher priority is selected more preferentially. The terminal device may prioritize selection of the 2-step slice-specific random access as the first random access type to try to access. When an access attempt using the first random access type fails or the maximum number of attempts is reached, the 4-step slice-specific random access is reselected as the second random access type to try to access. Of course, the priority order given above is only exemplary, and other priority orders may also be used, which are not limited in the present disclosure. In addition, the network device may send fourth indication information to the terminal device, where the fourth indication information is used to indicate priorities of the plurality of random access types to the terminal device. In embodiments of the present disclosure, the timing of sending the fourth indication information is not limited. For example, the fourth indication information may be sent together with the above random access configuration information, or may be sent separately with the above random access configuration information, or other appropriate timing may be selected for sending.

In an example, in a case where the plurality of random access types configured for the terminal device include the legacy random access and the slice-specific random access, the terminal device prioritize selection of the slice-specific random access to try to access.

Optionally, the network device indicates to the terminal device whether to prioritize selection of the slice-specific random access to try to access. If the network device indicates the terminal device to prioritize selection of the slice-specific random access to try to access, then the terminal device will prioritize selection of the slice-specific random access to try to access during the random access procedure; otherwise, the terminal device will prioritize selection of the legacy random access to try to access or request the network device to obtain indication information of which random access type is prioritized to be selected.

For example, when at least one of the following cases 1 to 16 is met, the terminal device prioritizes selection of the slice-specific random access:
Case 1: the terminal device obtains an intended slice.
Case 2: the intended slice of the terminal device is the same as a slice corresponding to the slice-specific random access. For example, if the intended slice of the terminal device is slice 1, and the slice corresponding to the slice-specific random access is also slice 1, then the two are the same.
Case 3: the intended slice of the terminal device belongs to the slice corresponding to the slice-specific random access. For example, the intended slice of the terminal device is slice 1, and the slice corresponding to slice-specific random access includes slice 1 or includes slice 1 and other slices (such as slice 2, etc.), then the intended slice of the terminal device belongs to the slice corresponding to slice-specific random access.
Case 4: the intended slice of the terminal device belongs to a slice group corresponding to the slice-specific random access. For example, the intended slice of the terminal device is slice 2, and the slice group corresponding to slice-specific random access includes slice 2 or includes slice 2 and other slices (such as slice 3, etc.), then the intended slice of the terminal device belongs to the slice group corresponding to the slice-specific random access.
Case 5: the intended slice of the terminal device is the same as a slice corresponding to a configuration parameter for the slice-specific random access. For example, if the intended slice of the terminal device is slice 2, and the slice corresponding to the configuration parameter for the slice-specific random access also includes at least slice 2, then the two are the same.
Case 6: the intended slice of the terminal device belongs to a slice group corresponding to the configuration parameter for the slice-specific random access. For example, the intended slice of the terminal device is slice 2, and the slice group corresponding to the configuration parameters of slice-specific random access includes slice 1 or slice 1 and other slices (such as slice 2, etc.), then the intended slice of the terminal device belongs to the slice group corresponding to the configuration parameter for the slice-specific random access.
Case 7: the intended slice of the terminal device is a specific slice. For example, the specific slice may be a slice corresponding to a specific service, such as a slice corresponding to a Ultra Reliable Low Latency Communication (URLLC) service. Optionally, for a certain slice, the terminal device may determine whether it is a specific slice according to the slice information of the slice.
Case 8: the intended slice of the terminal device is the specific slice and is the same as the slice corresponding to the slice-specific random access.
Case 9: the intended slice of the terminal device is the specific slice and belongs to the slice group corresponding to the slice-specific random access.
Case 10: the intended slice of the terminal device is the specific slice and belongs to the slice corresponding to the slice-specific random access.
Case 11: the intended slice of the terminal device is the specific slice and is the same as the slice corresponding to the configuration parameter for the slice-specific random access.
Case 12: the intended slice of the terminal device is the specific slice and belongs to the slice group corresponding to the configuration parameter for the slice-specific random access.
Case 13: the terminal device is configured with a resource for the slice-specific random access. For example, a time-frequency resource and/or a preamble resource corresponding to slice-specific random access are configured for the terminal device.
Case 14: the terminal device supports the slice-specific random access.
Case 15: the terminal device and/or network device is a specific version or an entity that supports a specific capability. The above-mentioned specific version may be a communication protocol version of R17 or later version, and the above-mentioned specific capability includes but is not limited to at least one of the following: support for the URLLC service, and support for slicing, and the like.
Case 16: the intended slice of the terminal device corresponds to a specific logical channel (LCH), or corresponds to a specific logical channel group, or corresponds to a logical channel of a specific priority, or corresponds to a logical channel group of a specific priority, or corresponds to a specific service.

Optionally, in a case where the terminal device prioritizes selection of the slice-specific random access to try to access, if an access attempt of the terminal device using slice-specific random access fails or the maximum number of attempts is reached, it is considered that the random access procedure is not successfully completed, or a random access problem is indicated to a higher layer. In the present disclosure, the random access procedure being not successfully completed may mean that the random access procedure is not successful or fails. In addition, indicating the random access problem to the higher layer may be to send information such as the reason why the random access procedure is not successfully completed to the higher layer, which is not limited in the present disclosure. Alternatively, if the access attempt of the terminal device using slice-specific random access fails or the maximum number of attempts is reached, the terminal device selects a legacy random access type to try to access. In this case, it may be considered that the selection priority of the slice-specific random access is higher than that of the legacy random access. When an access attempt by selecting the slice-specific random access fails or the maximum number of attempts is reached, the legacy random access type is selected to try to access again, which helps to increase the success rate of access.

In this example, when the random access types configured for the terminal device include the legacy random access and the slice-specific random access, the terminal device prioritizes selection of the slice-specific random access to try to access, ensuring oneness of behavior of the terminal device, and ensuring that the network side knows the required slice as soon as possible for subsequent processing, and ensuring prioritized access and fast access for the slice service.

In another example, when the plurality of random access types configured for the terminal device include the legacy random access and the slice-specific random access, the terminal device prioritizes selection of the legacy random access to try to access.

Optionally, the network device indicates to the terminal device whether to prioritize selection of the legacy random access to try to access. If the network device indicates to the terminal device that the legacy random access is prioritized to be selected, then the terminal device prioritizes selection of the legacy random access during the random access procedure; otherwise, the terminal device prioritizes selection of the slice-specific random access to try to access or requests, from the network device, the indication information of which random access type is prioritized to be selected.

For example, when at least one of the following cases 1 to 16 is met, the terminal device prioritizes selection of the legacy random access:
Case 1: the terminal device does not obtain the intended slice.
Case 2: the intended slice of the terminal device is not the same as the slice corresponding to the slice-specific random access. For example, if the intended slice of the terminal device is slice 1, and the slice corresponding to the slice-specific random access is slice 2 or at least does not include slice 1, then the intended slice of the terminal device is not the same as the slice corresponding to the slice-specific random access.
Case 3: the intended slice of the terminal device does not belong to the slice corresponding to the slice-specific random access. For example, the intended slice of the terminal device is slice 1, and the slice corresponding to slice-specific random access includes slice 2 and slice 3 or at least does not include slice 1, then the intended slice of the terminal device does not belong to the slice corresponding to slice-specific random access.
Case 4: the intended slice of the terminal device does not belong to the slice group corresponding to the slice-specific random access. For example, the intended slice of the terminal device is slice 2, and the slice group corresponding to slice-specific random access includes slice 1 and slice 3 or at least does not include slice 1, then the intended slice of the terminal device does not belong to the slice group corresponding to slice-specific random access.
Case 5: the intended slice of the terminal device is not the same as the slice corresponding to the configuration parameter for the slice-specific random access. For example, the intended slice of the terminal device is slice 2, and the slice corresponding to the configuration parameter for the slice-specific random access is slice 1 or at least does not include slice 2, and then the intended slice of the terminal device is not the same as the slice corresponding to the configuration parameter for the slice-specific random access.
Case 6: the intended slice of the terminal device does not belong to the slice group corresponding to the configuration parameter for the slice-specific random access. For example, the intended slice of the terminal device is slice 2, and the slice group corresponding to the configuration parameter for slice-specific random access includes slice 1 and slice 3 or at least does not include slice 2, then the intended slice of the terminal device does not belong to the slice group corresponding to the configuration parameter for the slice-specific random access.
Case 7: the intended slice of the terminal device is not a specific slice. For example, the specific slice may be a slice corresponding to a specific service, such as a slice corresponding to the U RLLC service.
Case 8: the intended slice of the terminal device is not the specific slice and/or is not the same as the slice corresponding to the slice-specific random access.
Case 9: the intended slice of the terminal device is not the specific slice and/or does not belong to the slice group corresponding to the slice-specific random access.
Case 10: the intended slice of the terminal device is not the specific slice and/or does not belong to the slice corresponding to the slice-specific random access.
Case 11: the intended slice of the terminal device is not the specific slice and/or is not the same as the slice corresponding to the configuration parameter for the slice-specific random access.
Case 12: the intended slice of the terminal device is not the specific slice and/or does not belong to the slice group corresponding to the configuration parameter for the slice-specific random access.
Case 13: the terminal device is not configured with a resource for the slice-specific random access. For example, the time-frequency resource and/or preamble resource corresponding to the slice-specific random access are not configured for the terminal device.
Case 14: the terminal device does not support the slice-specific random access.
Case 15: the terminal device and/or network device is not a specific version or is an entity that does not support a specific capability. The specific version may be a communication protocol version of R17 or later version, and the specific capability includes but is not limited to at least one of the following: support for the URLLC service, and support for slicing, and the like.
Case 16: the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service.

Optionally, in a case where the terminal device prioritizes selection of the legacy random access attempt to access, if the access attempt of the terminal device using the legacy random access fails or the maximum number of attempts is reached, it is considered that the random access procedure is not successfully completed, or an random access problem is indicated to a higher layer. Alternatively, if the access attempt of the terminal device using the legacy random access fails or the maximum number of attempts is reached, the terminal device selects the slice-specific random access type to try to access. In this case, it may be considered that the selection priority of legacy random access is higher than that of slice-specific random access. When the access attempt using the legacy random access fails or the maximum number of attempts is reached, the terminal device selects the slice-specific random access type to try again, which helps to increase the access success rate.

In this example, when the random access types configured for the terminal device include the legacy random access and the slice-specific random access, the terminal device prioritizes selection of the legacy random access to try to access, ensuring the consistency of terminal device behavior, and more access attempt opportunities are given to the slice service. For example, when the access attempt using the legacy random access fails, the slice-specific random access may be selected to try again.

In some embodiments, in a case where the random access types configured for the terminal device include the legacy random access and the slice-specific random access, and the slice-specific random access configured for the terminal device includes the 2-step slice-specific random access and the 4-step slice-specific random access, the first random access type which is prioritized to be selected is the 2-step slice-specific random access.

Optionally, when at least one of the following cases 1 to 7 is met, the terminal device prioritizes selection of the 2-step slice-specific random access:
Case 1: a channel quality is greater than or equal to a first threshold value.
Case 2: the channel quality is less than a second threshold value but greater than a third threshold value.
Case 3: the intended slice of the terminal device is a specific slice.
Case 4: the intended slice of the terminal device corresponds to a specific logical channel, or corresponds to a specific logical channel group, or corresponds to a logical channel of a specific priority, or corresponds to a logical channel group of a specific priority, or corresponds to a specific service.
Case 5: the random access is on Uplink (UL) or Supplementary Uplink (SUL). Typically, the random access is on UL.
Case 6: the terminal device and/or network device is a specific version or an entity supporting a specific capability.
Case 7: the terminal device is configured with a resource for the 2-step slice-specific random access.

In the present disclosure, the channel quality includes but not limited to at least one of the following: Reference Signal Receiving Power (RSRP), Reference Signal Receiving Quality (RSRQ), Signal to Interference plus Noise Ratio (SINR), and so on. In addition, threshold values in the present disclosure, such as the above-mentioned first threshold value, second threshold value, third threshold value and respective threshold value described below, etc., may be configured by the network device to the terminal device, or may predefined by a protocol, which is not limited in the present disclosure. In addition, regarding the descriptions of specific version and specific capability, reference may be found in previous descriptions, and repeated descriptions will be omitted here.

Optionally, after the terminal device prioritizes selection of the 2-step slice-specific random access to try to access, if the access attempt using the 2-step slice-specific random access fails or the maximum number of attempts is reached, the terminal device considers that the random access procedure is not successfully completed, or indicates a random access problem to a higher layer.

Optionally, after the terminal device prioritizes selection of the 2-step slice-specific random access to try to access, if the access attempt using the 2-step slice-specific random access fails or the maximum number of attempts is reached, the terminal device selects a second random access type to try to access. The second random access type may be another random access type different from the 2-step slice-specific random access. In an example, the second random access type is 4-step slice-specific random access, that is, when the access attempt of the terminal device using the 2-step slice-specific random access fails or the maximum number of attempts is reached, the terminal device reselects the 4-step slice-specific random access to try to access. Optionally, the premise that the terminal device reselects the 4-step slice-specific random access to try to access is that a resource for the 4-step slice-specific random access is configured for the terminal device. Optionally, if the access attempt of the terminal device using the 4-step slice-specific random access fails or the maximum number of attempts is reached, the terminal device considers that the random access procedure is successfully completed, or indicates the random access problem to the higher layer, or selects the legacy random access type to try to access. In another example, the second random access type is the legacy random access, that is, when the access attempt of the terminal device using the 2-step slice-specific random access fails or the maximum number of attempts is reached, the terminal device reselects the legacy random access to try to access. The legacy random access may be the 2-step legacy random access or the 4-step legacy random access. For example, if a resource for the 2-step legacy random access is configured for the terminal device, but a resource for the 4-step legacy random access is not configured, the terminal device reselects the 2-step legacy random access to try to access. If the resource for the 4-step legacy random access is configured for the terminal device, but the resource for the 2-step legacy random access is not configured, the terminal device reselects the 4-step legacy random access to try to access. If the resource for the 2-step legacy random access and the resource for the 4-step legacy random access are configured for the terminal device, the terminal device may select a random access type to try to access according to a predetermined policy. For example, when the channel quality is greater than or equal to a four threshold value and/or when the service is a specific service (such as URLLC service, such as corresponding to a specific LCH or logical channel group, such as corresponding to an LCH or logical channel group of a specific priority, etc.), the terminal device selects the 2-step legacy random access to try to access; otherwise, the terminal device selects the the 4-step legacy random access to try to access. Optionally, if the terminal device is configured with the resource for the 2-step legacy random access and the resource for the 4-step legacy random access resources, after the terminal device selects a legacy random access type to try to access, if the access attempt using the random access type fails or the maximum number of attempts is reached, it may be considered that the random access procedure is successfully completed, or the random access problem is indicated to the higher layer, or another legacy random access type is used to try to access again.

In an example, in a case where the plurality of random access types configured for the terminal device include the 4-step slice-specific random access, when the access attempt of the terminal device using the 2-step slice-specific random access fails or the maximum number of attempts is reached, the terminal device selects the 4-step slice-specific random access to try to access again. In another example, in a case where the plurality of random access types configured for the terminal device do not include the 4-step slice-specific random access, when the access attempt of the terminal device using 2-step slice-specific random access fails or the maximum number of attempts is reached, the terminal device selects the legacy random access to try to access again. In yet another example, in a case where the plurality of random access types configured for the terminal device include the 4-step slice-specific random access and the legacy random access, when the access attempt of the terminal device using the 2-step slice-specific random access fails or the maximum number of attempts is reached, the terminal device selects the legacy random access to try to access again, instead of selecting the 4-step slice-specific random access to try to access again.

In addition, if the second random access type selected by the terminal device is the legacy random access, the terminal device may directly select the 2-step legacy random access to try to access; the terminal device may also directly select the 4-step legacy random access to try to access; or, the terminal may first select the 2-step legacy random access to try to access, and when the access attempt of the terminal device using the 2-step legacy random access fails or the maximum number of attempts is reached, the terminal device then selects the 4-step legacy random access to try to access.

Optionally, when at least one of the following cases 1 to 3 is met, the second random access type is the 2-step legacy random access in legacy random access:
Case 1: the channel quality is greater than or equal to a fourth threshold value.
Case 2: he channel quality is less than a fifth threshold value but greater than a sixth threshold value.
Case 3: a resource for the 2-step legacy random access is configured for the terminal device.

For the description of the channel quality, the threshold values and the resource for the random access type, reference may be made to the description regarding the above embodiments, and repeated descriptions will be omitted here and below.

In some embodiments, in a case where the slice-specific random access configured for the terminal device includes the 4-step slice-specific random access but does not include the 2-step slice-specific random access, that is, the 2-step slice-specific random access is not configured, the first random access type which is prioritized to be selected by the terminal device is the 4-step slice-specific random access. Optionally, if the access attempt of the terminal device using the 4-step slice-specific random access fails or the maximum number of attempts is reached, the legacy random access is selected to try to access again. The legacy random access may be the 2-step legacy random access, or may be the 4-step legacy random access. For example, when at least one of the above cases 1 to 3 is met, the 2-step legacy random access is selected to try to access again; otherwise, the 4-step legacy random access is selected to try to access.

In some embodiments, when at least one of the following cases 1 to 5 is met, the first random access type which is prioritized to be selected is the legacy random access, or the 4-step slice-specific random access:
Case 1: the intended slice of the terminal device is not a specific slice.
Case 2: the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service.
Case 3: the terminal device and/or network device is not a specific version or the terminal device and/or network device is an entity that does not support a specific capability.
Case 4: a resource for the 2-step random access is not configured for the terminal device.
Case 5: the intended slice of the terminal device is not obtained.

Based on this, when at least one of the following cases 1 to 4 is met, the first random access type which is prioritized to be selected is the 2-step legacy random access in the legacy random access:
Case 1: the channel quality is greater than or equal to the fourth threshold value.
Case 2: The channel quality is less than the fifth threshold value but greater than the sixth threshold value.
Case 3: the resource for the 2-step legacy random access is configured for the terminal device;

Situation 4: The 4-step slice-specific random access resource is not configured for the terminal device.

Based on this, the first random access type which is prioritized to be selected is the legacy random access, and is the 2-step legacy random access.

In some other embodiments, when the 4-step slice-specific random access is not configured, the first random access type which is prioritized to be selected is the legacy random access.

Optionally, the above plurality of random access types are selected in a descending order of priority: the 2-step slice-specific random access, the 4-step slice-specific random access, the 2-step legacy random access, and the 4-step legacy random access. In some other embodiments, the above plurality of random access types are selected in a descending order of priority: the 4-step slice-specific random access, the 2-step slice-specific random access, the 4-step legacy random access, and the 2-step legacy random access. In some other embodiments, the above plurality of random access types are selected in a descending order of priority: the 4-step slice-specific random access, and the 4-step legacy random access.

In some embodiments, in a case where the random access types configured for the terminal device include the legacy random access and the slice-specific random access, and the legacy random access configured for the terminal device includes the 2-step legacy random access and the 4-step legacy random access, the first random access type which is prioritized to be selected is the 2-step legacy random access.

Optionally, when at least one of the following cases 1 to 3 is met, the terminal device prioritizes selection of the 2-step legacy random access:
Case 1: the channel quality is greater than or equal to the fourth threshold value.
Case 2: the channel quality is less than the fifth threshold value but greater than the sixth threshold value.
Case 3: the resource for the 2-step legacy random access is configured for the terminal device.

Optionally, after the terminal device prioritizes selection of the 2-step legacy random access to try to access, if the access attempt using the 2-step legacy random access fails or the maximum number of attempts is reached, the terminal device considers that the random access procedure is successfully completed, or a random access problem is indicated to a higher layer.

Optionally, after the terminal device prioritizes selection of the 2-step legacy random access to try to access, if the access attempt using the 2-step legacy random access fails or the maximum number of attempts is reached, the terminal device selects the second random access type to try access. The second random access type may be another random access type different from the 2-step legacy random access. In an example, the second random access type is the 4-step legacy random access, that is, when the access attempt of the terminal device using the 2-step legacy random access fails or the maximum number of attempts is reached, the terminal device reselects the 4-step legacy random access to try to access. Optionally, the premise that the terminal device reselects the 4-step legacy random access to try to access is that the resource for the 4-step legacy random access is configured for the terminal device. Optionally, if the access attempt of the terminal device using the 4-step legacy random access fails or the maximum number of attempts is reached, the terminal device considers that the random access procedure is not successfully completed, or indicates the random access problem to the higher layer, or selects the slice-specific random access type to try to access. For example, when the channel quality is not greater than the fourth threshold value and/or when the service is not a specific service (the specific service may include: such as URLLC service, such as corresponding to a specific LCH or logical channel group, such as corresponding to a LCH or logical channel group of a specific priority, etc.), the second random access type is the 4-step legacy random access. In another example, the second random access type is the slice-specific random access, that is, when the access attempt of the terminal device using the 2-step legacy random access fails or the maximum number of attempts is reached, the terminal device reselects the slice-specific random access to try to access. The slice-specific random access may be the 2-step slice-specific random access, or the 4-step slice-specific random access. For example, if the resource for the 2-step slice-specific random access is configured for the terminal device, but the resource for the 4-step slice-specific random access is not configured, then the terminal device reselects the 2-step slice-specific random access to try to access. If the resource for the 4-step slice-specific random access is configured for the terminal device, but the resource for the 2-step slice-specific random access is not configured, then the terminal device reselects 4-step slice-specific random access to try to access. If the terminal device is configured with the resource for the 2-step slice-specific random access and the resource for the 4-step slice-specific random access, the terminal device may select a random access type to try to access according to a predetermined policy. For example, when the channel quality is greater than or equal to a seventh threshold value, the terminal device selects the 2-step slice-specific random access to try to access; otherwise, the terminal device selects the 4-step slice-specific random access to try to access. Optionally, in a case where the terminal device is configured with the resource for the 2-step slice-specific random access and the resource for the 4-step slice-specific random access resource, after the terminal device selects a slice-specific random access type to try to access, if the access attempt using the slice-specific random access fails or the maximum number of attempts is reached, it may be considered that the random access procedure is successfully completed, or the random access problem may be indicated to the higher layer, or another slice-specific random access type may be used to try to access again.

In an example, if the plurality of random access types configured for the terminal device include the 4-step legacy random access, when the access attempt of the terminal device using the 2-step legacy random access fails or the maximum number of attempts is reached, the terminal device selects the 4-step legacy random access to try to access again. In another example, if the plurality of random access types configured for the terminal device do not include the 4-step legacy random access, when the access attempt of the terminal device using the 2-step legacy random access fails or the maximum number of attempts is reached, the terminal device selects the slice-specific random access to try to access again. In yet another example, if the plurality of random access types configured for the terminal device include the 4-step legacy random access and the slice-specific random access, when the access attempt of the terminal device using 2-step legacy random access fails or the maximum number of attempts is reached, the terminal device selects the slice-specific random access to try to access again, instead of selecting the 4-step legacy random access to try to access again.

In addition, if the second random access type selected by the terminal device is the slice-specific random access, the terminal device may directly select the 2-step slice-specific random access to try to access; or the terminal device may directly select the 4-step slice-specific random access to try to access; or, the terminal device may first select the 2-step slice-specific random access to try to access, and when the access attempt using the 2-step slice-specific random access fails or the maximum number of attempts is reached, the terminal device then selects the 4-step slice-specific random access to try to access.

Optionally, when at least one of the following cases 1 to 16 is met, the second random access type is the slice-specific random access:
Case 1: the terminal device obtains the intended slice.
Case 2: the intended slice of the terminal device is the same as the slice corresponding to the slice-specific random access.
Case 3: the intended slice of the terminal device belongs to the slice corresponding to the slice-specific random access.
Case 4: the intended slice of the terminal device belongs to the slice group corresponding to the slice-specific random access.
Case 5: the intended slice of the terminal device is the same as the slice corresponding to the configuration parameter for the slice-specific random access.
Case 6: the intended slice of the terminal device belongs to the slice group corresponding to the configuration parameter for the slice-specific random access.
Case 7: the intended slice of the terminal device is the specific slice.
Case 8: the intended slice of the terminal device is the specific slice and is the same as the slice corresponding to the slice-specific random access.
Case 9: the intended slice of the terminal device is the specific slice and belongs to the slice group corresponding to slice-specific random access.
Case 10: the intended slice of the terminal device is the specific slice and belongs to the slice corresponding to the slice-specific random access.
Case 11: the intended slice of the terminal device is the specific slice and is the same as the slice corresponding to the configuration parameter for the slice-specific random access.
Case 12: the intended slice of the terminal device is the specific slice and belongs to the slice group corresponding to the configuration parameter for the slice-specific random access.
Case 13: a resource for the lice-specific random access is configured for the terminal device.
Case 14: the terminal device supports the slice-specific random access;
Case 15: the terminal device and/or network device is a specific version or an entity that supports a specific capability;
Case 16: the intended slice of the terminal device corresponds to the specific logical channel, or corresponds to the specific logical channel group, or corresponds to the logical channel of the specific priority, or corresponds to the logical channel group of the specific priority, or corresponds to the specific service.

The descriptions of the above cases may be found in descriptions above, and will not be repeated here and below.

In some embodiments, when the legacy random access configured for the terminal device includes the 4-step legacy random access but does not include the 2-step legacy random access, that is, when the 2-step legacy random access is not configured, the first random access type which is prioritized to be selected by the terminal device is the 4-step legacy random access. Optionally, if the access attempt of the terminal device using the 4-step legacy random access fails or the maximum number of attempts is reached, the terminal device selects the slice-specific random access to try to access again. The slice-specific random access may be the 2-step slice-specific random access, or may be the 4-step slice-specific random access.

In some embodiments, when at least one of the following cases 1 to 5 is met, the first random access type which is prioritized to be selected is the slice-specific random access, or the 4-step legacy random access:
Case 1: the intended slice of the terminal device is the specific slice.
Case 2: the intended slice of the terminal device corresponds to the specific logical channel, or corresponds to the specific logical channel group, or corresponds to the logical channel of the specific priority, or corresponds to the logical channel group of the specific priority, or corresponds to the specific service.
Case 3: the terminal device and/or network device is the specific version or the entity that supports the specific capability;
Case 4: the resource for the 2-step legacy random access is not configured for the terminal device.
Case 5: the terminal device obtains the intended slice.

Based on this, when at least one of the following cases 1 to 8 is met, the first random access type which is prioritized to be selected is the 2-step slice-specific random access in the slice-specific random access:
Case 1: the channel quality is greater than or equal to the first threshold value.
Case 2: the channel quality is less than the second threshold value but greater than the third threshold value.
Case 3: the intended slice of the terminal device is the specific slice.
Case 4: the intended slice of the terminal device corresponds to the specific logical channel, or corresponds to the specific logical channel group, or corresponds to the logical channel of the specific priority, or corresponds to the logical channel group of the specific priority, or corresponds to the specific service.
Case 5: the random access is on UL or SUL.
Case 6: the terminal device and/or network device is the specific version or the entity that supports the specific capability.
Case 7: the terminal device is configured with the resource for the 2-step slice-specific random access.
Case 8: the terminal device is not configured with the resource for the 4-step legacy random access.

Based on this, the first random access type which is prioritized to be selected is the slice-specific random access, and is 2-step slice-specific random access.

In some other embodiments, when the 4-step legacy random access is not configured, the first random access type which is prioritized to be selected is the slice-specific random access.

Optionally, the above plurality of random access types are selected in a descending order of priority: the 2-step legacy random access, the 4-step legacy random access, the 2-step slice-specific random access, and the 4-step slice-specific random access. In some other embodiments, the above plurality of random access types are selected in a descending order of priority: the 4-step legacy random access, the 2-step legacy random access, the 4-step slice-specific random access, and the 2-step slice-specific random access. In some other embodiments, the above plurality of random access types are selected in a descending order of priority: the 4-step legacy random access, and the 4-step slice-specific random access.

In some embodiments, in a case where the random access types configured for the terminal device include the 2-step random access and the 4-step random access, the first random access type which is prioritized to be selected by the terminal device is the 2-step random access. The 2-step random access includes the 2-step legacy random access and/or the 2-step slice-specific random access, and the 4-step random access includes the 4-step legacy random access and/or the 4-step slice-specific random access.

Optionally, when at least one of the following cases 1 to 8 is met, the terminal device prioritizes selection of the 2-step random access:
Case 1: the channel quality is greater than or equal to the seventh threshold value.
Case 2: the channel quality is less than the eighth threshold value but greater than the ninth threshold value.
Case 3: the resource for the 2-step random access is configured for the terminal device.
Case 4: the terminal device supports the 2-step random access.
Case 5: the intended slice of the terminal device is the specific slice or slice group.
Case 6: the random access is on UL or SUL.
Case 7: the terminal device and/or network device is the specific version or the entity that supports the specific capability;
Case 8: the intended slice of the terminal device corresponds to the specific logical channel, or corresponds to the specific logical channel group, or corresponds to the logical channel of the specific priority, or corresponds to the logical channel group of the specific priority, or corresponds to the specific service.

Optionally, after the terminal device prioritizes selection of the 2-step random access to try to access, if the access attempt using the 2-step random access fails or the maximum number of attempts is reached, the terminal device considers that the random access procedure is successfully completed, or indicates the random access problem to the higher layer.

Optionally, after the terminal device prioritizes selection of the 2-step random access attempt to access, if the access attempt using the 2-step random access fails or the maximum number of attempts is reached, the terminal device selects the 4-step random access to try to access. Optionally, the 4-step random access may be the 4-step slice-specific random access, or the 4-step legacy random access. For example, if the resource for the 4-step slice-specific random access is configured for the terminal device, but the resource for the 4-step legacy random access is not configured, then the terminal device reselects the 4-step slice-specific random access to try to access. If the resource for the 4-step legacy random access is configured for the terminal device, but the resource for the 4-step slice-specific random access is not configured, then the terminal device reselects the 4-step legacy random access to try to access. If the terminal device is configured with the resource for the 4-step slice-specific random access and the resource for the 4-step legacy random access, then the terminal device may select a random access type to try to access according to a predetermined policy. For example, when the terminal device obtains the intended slice (or other cases where the slice-specific random access is prioritized to be selected as described above), the terminal device selects the 4-step slice-specific random access to try to access; otherwise, the terminal device selects the 4-step legacy random access to try to access. Optionally, if the terminal device is configured with the resource for the 4-step slice-specific random access and the resource for the 4-step legacy random access, after the terminal device selects a 4-step random access type to try to access, if the access attempt using the 4-step random access type fails or the maximum number of attempts is reached, it may be considered that the random access procedure is not successfully completed, or the random access problem is indicated to the higher layer, or another 4-step random access type is used to try to access again.

In an example embodiment, when the plurality of random access types configured for the terminal device include the 2-step slice-specific random access, the first random access type which is prioritized to be selected by the terminal device is the 2-step slice-specific random access.

Optionally, when at least one of the following cases 1 to 17 is met, the terminal device prioritizes selection of the 2-step slice-specific random access:
Case 1: the terminal device obtains the intended slice.
Case 2: the intended slice of the terminal device is the same as the slice corresponding to the slice-specific random access.
Case 3: the intended slice of the terminal device belongs to the slice corresponding to the slice-specific random access.
Case 4: the intended slice of the terminal device belongs to the slice group corresponding to the slice-specific random access.
Case 5: the intended slice of the terminal device is the same as the slice corresponding to the configuration parameter for the slice-specific random access.
Case 6: the intended slice of the terminal device belongs to the slice group corresponding to the configuration parameter for the slice-specific random access.
Case 7: the intended slice of the terminal device is the specific slice.
Case 8: the intended slice of the terminal device is the specific slice and is the same as the slice corresponding to the slice-specific random access.
Case 9: the intended slice of the terminal device is the specific slice and belongs to the slice group corresponding to slice-specific random access.
Case 10: the intended slice of the terminal device is the specific slice and belongs to the slice corresponding to the slice-specific random access.
Case 11: the intended slice of the terminal device is the specific slice and is the same as the slice corresponding to the configuration parameter for the slice-specific random access.
Case 12: the intended slice of the terminal device is the specific slice and belongs to the slice group corresponding to the configuration parameter for the slice-specific random access.
Case 13: the terminal device is configured with the resource for the slice-specific random access.
Case 14: the terminal device is configured with the resource for the 2-step slice-specific random access.
Case 15: the terminal device supports the slice-specific random access.
Case 16: the terminal device and/or network device is the specific version or the entity that supports the specific capability.
Case 17: the intended slice of the terminal device corresponds to the specific logical channel, or corresponds to the specific logical channel group, or corresponds to the logical channel of the specific priority, or corresponds to the logical channel group of the specific priority, or corresponds to the specific service.

In an example embodiment, when the plurality of random access types configured for the terminal device do not include the 2-step slice-specific random access, the first random access type which is prioritized to be selected by the terminal device is the 2-step legacy random access.

In an example embodiment, when at least one of the following cases 1 to 8 is met, the first random access type which is prioritized to be selected is the 2-step legacy random access:
Case 1: the intended slice of the terminal device is not obtained.
Case 2: the intended slice of the terminal device is not the specific slice.
Case 3: the intended slice of the terminal device does not correspond to the specific logical channel, or does not correspond to the specific logical channel group, or does not correspond to the logical channel of the specific priority, or does not correspond to the logical channel group of the specific priority, or does not correspond to the specific service.
Case 4: the terminal device and/or network device is not the specific version or is an entity that does not support the specific capability.
Case 5: the terminal device is not configured with the resource for the 2-step slice-specific random access.
Case 6: the terminal device is configured with the resource for the 2-step legacy random access.
Case 7: the channel quality is greater than or equal to the fourth threshold value.
Case 8: the channel quality is less than the fifth threshold value but greater than the sixth threshold value.

Optionally, the above plurality of random access types are selected in a descending order of priority: the 2-step slice-specific random access, the 2-step legacy random access, the 4-step slice-specific random access, and the 4-step legacy random access. In some other embodiments, the above plurality of random access types are selected in a descending order of priority: the 2-step legacy random access, the 2-step slice-specific random access, the 4-step legacy random access, and the 4-step slice-specific random access. In some other embodiments, the above plurality of random access types are selected in a descending order of priority: the 2-step legacy random access, and the 2-step slice-specific random access.

In this embodiment, the random access type which is prioritized to be selected is the 2-step random access, which ensures the prioritized access of the slice service, enables the network side to know the required slice as soon as possible for subsequent processing, and reduces the random access delay.

In some embodiments, in a case where the random access types configured for the terminal device include the 2-step random access and the 4-step random access, the first random access type which is prioritized to be selected by the terminal device is the 4-step random access. The 2-step random access includes the 2-step legacy random access and/or the 2-step slice-specific random access, and the 4-step random access includes the 4-step legacy random access and/or the 4-step slice-specific random access.

Optionally, when at least one of the following cases 1 to 8 is met, the terminal device prioritizes selection of the 4-step random access:
Case 1: the channel quality is less than the seventh threshold value.
Case 2: the channel quality is greater than the eighth threshold value or less than the ninth threshold value.
Case 3: the terminal device is not configured with the resource for the 2-step random access.
Case 4: the terminal device does not support the 2-step random access.
Case 5: the intended slice of the terminal device is not the specific slice or slice group;
Case 6: the random access is not on UL or SUL.
Case 7: the terminal device or network device is not the specific version or an entity that does not support the specific capability.
Case 8: the intended slice of the terminal device does not correspond to the specific logical channel, or does not correspond to the specific logical channel group, or does not correspond to the logical channel of the specific priority, or does not correspond to the logical channel group of the specific priority, or does not correspond to the specific service.

Optionally, after the terminal device prioritizes selection of the 4-step random access to try to access, if the access attempt using the 4-step random access fails or the maximum number of attempts is reached, the terminal device considers that the random access procedure is successfully completed, or indicates the random access problem to the higher layer.

Optionally, after the terminal device prioritizes selection of the 4-step random access to try to access, if the access attempt using the 4-step random access fails or the maximum number of attempts is reached, the terminal device selects the 2-step random access to try to access. Optionally, the 2-step random access may be the 2-step slice-specific random access, or the 2-step legacy random access. For example, if the resource for the 2-step slice-specific random access is configured for the terminal device, but the resource for the 2-step legacy random access is not configured, the terminal device reselects the 2-step slice-specific random access to try to access. If the resource for the 2-step legacy random access is configured for the terminal device, but the resource for the 2-step slice-specific random access is not configured, the terminal device reselects the 2-step legacy random access to try to access. If the terminal device is configured with the resource for the 2-step slice-specific random access and the resource for the 2-step legacy random access, the terminal device may select a random access type to try to access according to a predetermined policy. For example, when the terminal device obtains the intended slice (or other cases where the slice-specific random access is prioritized to be selected as described above), the terminal device selects the 2-step slice-specific random access to try to access; otherwise, the terminal device selects the 2-step legacy random access to try to access. Optionally, if the terminal device is configured with the resource for the 2-step slice-specific random access and the resource for the 2-step legacy random access, after the terminal device selects a 2-step random access type to try to access, if the access attempt using the 2-step random access type fails or the maximum number of attempts is reached, it may be considered that the random access procedure is not successfully completed, or the random access problem is indicated to the higher layer, or another 2-step random access type is used to try to access again.

In an example embodiment, when the plurality of random access types configured for the terminal device include the 4-step slice-specific random access, the first random access type which is prioritized to be selected by the terminal device is the 4-step slice-specific random access.

Optionally, when at least one of the following cases 1 to 17 is met, the terminal device prioritizes selection of the 4-step slice-specific random access:
Case 1: the terminal device obtains the intended slice.
Case 2: the intended slice of the terminal device is the same as the slice corresponding to the slice-specific random access.
Case 3: the intended slice of the terminal device belongs to the slice corresponding to the slice-specific random access.
Case 4: the intended slice of the terminal device belongs to the slice group corresponding to the slice-specific random access.
Case 5: the intended slice of the terminal device is the same as the slice corresponding to the configuration parameter for the slice-specific random access.
Case 6: the intended slice of the terminal device belongs to the slice group corresponding to the configuration parameter for the slice-specific random access.
Case 7: the intended slice of the terminal device is the specific slice.
Case 8: the intended slice of the terminal device is the specific slice and is the same as the slice corresponding to the slice-specific random access.
Case 9: the intended slice of the terminal device is the specific slice and belongs to the slice group corresponding to slice-specific random access.
Case 10: the intended slice of the terminal device is the specific slice and belongs to the slice corresponding to the slice-specific random access.
Case 11: the intended slice of the terminal device is the specific slice and is the same as the slice corresponding to the configuration parameter for the slice-specific random access.
Case 12: the intended slice of the terminal device is the specific slice and belongs to the slice group corresponding to the configuration parameter for the slice-specific random access.
Case 13: the terminal device is configured with the resource for the slice-specific random access.
Case 14: The terminal device is configured with the resource for the 4-step slice-specific random access.
Case 15: the terminal device supports the slice-specific random access.
Case 16: the terminal device and/or network device is the specific version or the entity that supports the specific capability.
Case 17: the intended slice of the terminal device corresponds to the specific logical channel, or corresponds to the specific logical channel group, or corresponds to the logical channel of the specific priority, or corresponds to the logical channel group of the specific priority, or corresponds to the specific service.

In an example embodiment, when the plurality of random access types configured for the terminal device do not include the 4-step slice-specific random access, the first random access type which is prioritized to be selected by the terminal device is the 4-step legacy random access.

In an example embodiment, when at least one of the following cases 1 to 8 is met, the first random access type which is prioritized to be selected is the 4-step legacy random access:
Case 1: the intended slice of the terminal device is not obtained.
Case 2: the intended slice of the terminal device is not the specific slice.
Case 3: the intended slice of the terminal device does not correspond to the specific logical channel, or does not correspond to the specific logical channel group, or does not correspond to the logical channel of the specific priority, or does not correspond to the logical channel group of the specific priority, or does not correspond to the specific service.
Case 4: the terminal device and/or network device is not the specific version or the entity that does not support the specific capability.
Case 5: the terminal device is not configured with the resource for the 4-step slice-specific random access.
Case 6: the terminal device is configured with the resource 4-step legacy random access.
Case 7: the channel quality is less than the fourth threshold value.
Case 8: the channel quality is greater than or equal to the fifth threshold value, or the channel quality is less than or equal to the sixth threshold value.

Optionally, the above plurality of random access types are selected in a descending order of priority: the 4-step slice-specific random access, the 4-step legacy random access, the 2-step slice-specific random access, and the 2-step legacy random access random access. In some other embodiments, the above plurality of random access types are selected in a descending order of priority: the 4-step legacy random access, the 4-step slice-specific random access, the 2-step legacy random access, and the 2-step slice-specific random access. In some other embodiments, the above plurality of random access types are selected in a descending order of priority: the 4-step slice-specific random access, and the 2-step slice-specific random access.

In the embodiments of the present disclosure, the 4-step random access is prioritized to be selected, which may improve the success rate of random access and reduce transmission delay under certain channel conditions. For example, when the 4-step random access fails due to resource conflict, another random access type may be used to try to access again, thereby increasing the success rate of the random access.

In some possible embodiments, the terminal device is further configured with at least one set of the following threshold values (for example, the random access configuration information further includes the at least one set of the following threshold values):
1. The first threshold value: used to determine to prioritize selection of one of the 2-step slice-specific random access and the 4-step slice-specific random access based on a magnitude relationship between the channel quality and the first threshold value. For example, if the channel quality is greater than or equal to the first threshold value, the 2-step slice-specific random access is prioritized to be selected; if the channel quality is less than the first threshold value, the 4-step slice-specific random access is prioritized to be selected.
2. The second threshold value and the third threshold value: used to determine to prioritize selection of one of the 2-step slice-specific random access and the 4-step slice-specific random access based on a magnitude relationship between the channel quality and the second and third threshold values. For example, if the channel quality is less than the second threshold value but greater than the third threshold value, the 2-step slice-specific random access is prioritized to be selected; if the channel quality is greater than or equal to the second threshold value or less than or equal to the third threshold value, the 4-step slice-specific random access is prioritized to be selected.
3. The fourth threshold value: used to determine to prioritize selection of one of the 2-step legacy random access and the 4-step legacy random access based on a magnitude relationship between the channel quality and the fourth threshold value. For example, if the channel quality is greater than or equal to the fourth threshold value, the 2-step legacy random access is prioritized to be selected; if the channel quality is less than the fourth threshold value, the 4-step legacy random access is prioritized to be selected.
4. The fifth threshold value and the sixth threshold value: used to determine to prioritize selection of one of the 2-step legacy random access and the 4-step legacy random access based on a magnitude relationship between the channel quality and the fifth and sixth threshold values. For example, if the channel quality is less than the fifth threshold value but greater than the sixth threshold value, the 2-step legacy random access is prioritized to be selected; if the channel quality is greater than or equal to the fifth threshold value, or less than or equal to the sixth threshold value, the 4-step legacy random access is prioritized to be selected.
5. The seventh threshold value: used to determine to prioritize selection of one of the 2-step random access and the 4-step random access based on a magnitude relationship between the channel quality and the seventh threshold value. For example, if the channel quality is greater than or equal to the seventh threshold value, the 2-step random access is prioritized to be selected; if the channel quality is less than the seventh threshold value, the 4-step random access is prioritized to be selected.
6. The eighth threshold value and the ninth threshold value: used to determine to prioritize selection of one of the 2-step random access and the 4-step random access based on a magnitude relationship between the channel quality and the eighth and ninth threshold value s. For example, if the channel quality is less than the eighth threshold but greater than the ninth threshold value, the 2-step random access is prioritized to be selected; if the channel quality is greater than or equal to the eighth threshold value, or less than or equal to the ninth threshold value, the 4-step random access is prioritized to be selected.

It should be noted that the threshold value (such as the first threshold value) used to determine to prioritize selection of one of the 2-step slice-specific random access and the 4-step slice-specific random access described above and the threshold value (such as the fourth threshold value) used to determine to prioritize selection of one of the 2-step legacy random access and 4-step legacy random access, may be reused or independently configured, which is not limited in the present disclosure. In addition, the foregoing threshold values may be configured by the network device, or may be pre-configured in the terminal device, which is not limited in the present disclosure.

In some possible embodiments, the above threshold values are configured individually for each slice; or the above threshold values are configured individually for each slice group; or the above threshold values are configured individually for each access category; or the above threshold values are common (i.e. applicable to all slices/all slice groups/all access types).

In some possible embodiments, there is at least one random access type configured with a corresponding maximum number of attempts among the above-mentioned plurality of random access types (the maximum number of attempts configured for different random access types may be the same, or may be different), and/or, there is a maximum number of attempts for all random access types (that is, the maximum number of attempts for all random access types is the same, and is the same value).

In some possible embodiments, among the above plurality of random access types, the slice-specific random access is configured with a corresponding maximum number of attempts; and/or, among the above plurality of random access types, the legacy random access is configured with a corresponding the maximum number of attempts. That is, the maximum number of attempts is configured separately for the slice-specific random access and the legacy random access. A maximum number of attempts is correspondingly configured for the slice-specific random access, and another maximum number of attempts is correspondingly configured for the legacy random access. The two maximum numbers of attempts may be the same or different.

In some possible embodiments, among the above plurality of random access types, the 2-step random access is configured with a corresponding maximum number of attempts; and/or, among the above plurality of random access types, the 4-step random access is configured with a corresponding maximum number of attempts. That is, the maximum number of attempts is configured separately for the 2-step random access and the 4-step random access. A maximum number of attempts is correspondingly configured for the 2-step random access, and another maximum number of attempts is correspondingly configured for the 4-step random access. The two maximum numbers of attempts may be the same or different.

In some possible embodiments, among the above plurality of random access types, each random access type is configured with a corresponding maximum number of attempts. That is, a corresponding maximum number of attempts is separately configured for each random access type, and the maximum number(s) of attempts configured corresponding to different random access types may be the same or different, which is more flexible.

In the embodiments of the present disclosure, the above-mentioned maximum number of attempts may be configured by the network device, or may be pre-configured in the terminal device, which is not limited in the present disclosure.

In some possible embodiments, the foregoing plurality of random access types at least include Contention Based Random Access (CBRA).

In some other possible embodiments, the above plurality of random access types may also include Contention Free Random Access (CFRA).

In some possible embodiments, the intended slice mentioned in the present disclosure is an intended single slice, or the intended slice is an intended slice group, or the intended slice is a slice or slice group corresponding to an intended parameter, or the intended slice is the intended parameter. Optionally, the above intended parameter may be access category or priority (for example, different priorities correspond to different slices, or simply priority) or logical channel (identity or priority) or logical channel group (identity or priority).

In an example embodiment, among the above-mentioned plurality of random access types, each random access type has a corresponding priority. If the priority of a certain random access type is the same as the priority expected by the terminal device, or belongs to the priority expected by the terminal device, then the terminal device prioritizes selection of this random access type as the first random access type to try to access.

In an example embodiment, among the above-mentioned plurality of random access types, each random access type has a corresponding priority. If the priority of a certain random access type is the same as the priority of the expected slice or service or logical channel or logical channel group or access type of the terminal device, or belongs to priority of the expected slice or service or logical channel or logical channel group or access type of the terminal device, then the terminal device prioritizes selection of this random access type as the first random access type to try to access.

It should also be noted that, in embodiments of the present disclosure, after the terminal device selects a random access type to try to access and fails to access or the maximum number of attempts is reached (but the random access procedure is not completed), whether to select another random access type to try to access again may be predefined by a protocol or indicated by the network device.

In some possible embodiments, if the network device only configures or supports one random access type, and/or the terminal device only supports one random access type, access is performed according to the random access type.

For example, if the network device only configures or supports the 2-step random access, and/or the terminal device only supports the 2-step random access, the terminal device uses the 2-step random access to try to access. Optionally, the 2-step random access may include the 2-step legacy random access and/or the 2-step slice-specific random access, and the terminal device may determine to prioritize selection of one of the two types according to the methods described in the above embodiments to try to access.

For example, if the network device only configures or supports the 4-step random access, and/or the terminal device only supports the 4-step random access, the terminal device uses the 4-step random access to try to access. Optionally, the 4-step random access may include the 4-step legacy random access and/or the 4-step slice-specific random access, and the terminal device may determine to prioritize selection of one of the two types according to the methods described in the above embodiments to try to access.

For example, the network device only configures or supports the slice-specific random access, and/or the terminal device only supports the slice-specific random access, the terminal device uses slice-specific random access to try to access. Optionally, the slice-specific random access may include the 2-step slice-specific random access and/or the 4-step slice-specific random access, and the terminal device may determine to prioritize selection of one of the two types according to the methods described in the above embodiments to try to access.

For example, if the network device only configures or supports the legacy random access, and/or the terminal device only supports the legacy random access, the terminal device uses the legacy random access to try to access. Optionally, the legacy random access may include the 2-step legacy random access and/or the 4-step legacy random access, and the terminal device may determine to prioritize selection of one of the two types to try to access.

The following are device embodiments of the present disclosure, which may be used to implement the method embodiments of the present disclosure. For details not disclosed in the device embodiments of the present disclosure, reference may be made to the method embodiments of the present disclosure.

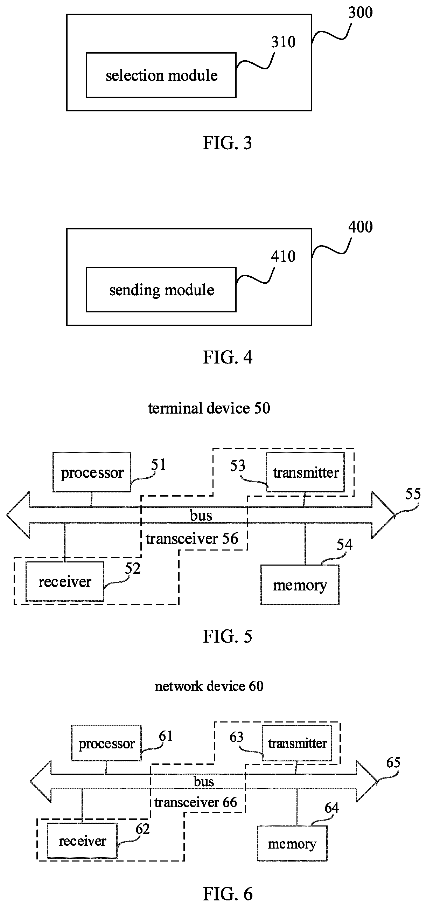

FIG. 3 is a block diagram of a random access type selection apparatus provided by an embodiment of the present disclosure. The apparatus has a function to implement the method embodiments at the terminal device side described above, and the function may be implemented by hardware or by hardware executing corresponding software. The apparatus may be the terminal device as described above, or may be provided in the terminal device. As shown in FIG. 3, the apparatus 300 may include a selection module 310.

The selection module 310 is configured to, in a case where a plurality of random access types are configured for the terminal device, prioritize selection of a first random access type from the plurality of random access types to try to access.

The plurality of random access types include legacy random access and slice-specific random access, the legacy random access includes 2-step legacy random access and/or 4-step legacy random access, and the slice-specific random access includes 2-step slice-specific random access and/or 4-step slice-specific random access.

In an example embodiment, the first random access type which is prioritized to be selected is the slice-specific random access.

In an example embodiment, selection of the slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

In an example embodiment, in a case where the slice-specific random access includes the 2-step slice-specific random access and the 4-step slice-specific random access, the first random access type which is prioritized to be selected is the 2-step slice-specific random access.

In an example embodiment, selection of the 2-step slice-specific random access is prioritized when at least one of the following cases is met:
a channel quality is greater than or equal to a first threshold value;
the channel quality is less than a second threshold value but greater than a third threshold value;
the intended slice of the terminal device is the specific slice;
the intended slice of the terminal device corresponds to the specific logical channel, or corresponds to the specific logical channel group, or corresponds to the logical channel of the specific priority, or corresponds to the logical channel group of the specific priority, or corresponds to the specific service;
the random access is on an uplink (UL) or a Supplementary Uplink (SUL);
the terminal device and/or network device is the specific version or the entity supporting the specific capability; or
the terminal device is configured with a resource for the 2-step slice-specific random access.

Optionally, in response to that an access attempt using the 2-step slice-specific random access fails or the maximum number of attempts is reached, the terminal device considers that a random access procedure is not successfully completed, or indicates a random access problem to a higher layer;
or,
in response to that the access attempt using the 2-step slice-specific random access fails or the maximum number of attempts is reached, the terminal device selects a second random access type to try to access.

Optionally, the second random access type is the 4-step slice-specific random access, or the second random access type is the legacy random access.

Optionally, the second random access type is the 2-step legacy random access in the legacy random access when at least one of the following cases is met:
the channel quality is greater than or equal to a fourth threshold value;
the channel quality is less than a fifth threshold value but greater than a sixth threshold value; or
the terminal device is configured with a resource for the 2-step legacy random access.

Optionally, in a case where the 2-step slice-specific random access is not configured, the first random access type which is prioritized to be selected is the 4-step slice-specific random access.

Optionally, the first random access type which is prioritized to be selected is the legacy random access or the slice-specific 4-step random when at least one of the following cases is met:
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 2-step slice-specific random access; or
the intended slice of the terminal is not obtained.

Optionally, the first random access type which is prioritized to be selected is the 2-step legacy random access in the legacy random access when at least one of the following cases is met:
the channel quality is greater than or equal to a fourth threshold value;
the channel quality is less than a fifth threshold value but greater than a sixth threshold value;
the terminal device is configured with a resource for the 2-step legacy random access; or
the terminal device is not configured with a resource for the 4-step slice-specific random access.

Optionally, in a case where the 4-step slice-specific random access is not configured, the first random access type which is prioritized to be selected is the legacy random access.

Optionally, the plurality of random access types are selected in a descending order of priority as follows: the 2-step slice-specific random access, the 4-step slice-specific random access, the 2-step legacy random access, and the 4-step legacy random access.

In an example embodiment, the first random access type which is prioritized to be selected is the legacy random access.

Optionally, selection of the legacy random access is prioritized when at least one of the following cases is met:
the terminal device does not obtain an intended slice;
the intended slice of the terminal device is not the same as a slice corresponding to the slice-specific random access;
the intended slice of the terminal device does not belong to the slice corresponding to the slice-specific random access;
the intended slice of the terminal device does not belong to a slice group corresponding to the slice-specific random access;
the intended slice of the terminal device is not the same as a slice corresponding to a configuration parameter for the slice-specific random access;
the intended slice of the terminal device does not belong to a slice group corresponding to the configuration parameter for the slice-specific random access;
the intended slice of the terminal device is not a specific slice;
the intended slice of the terminal device is not the specific slice and/or is not the same as the slice corresponding to the slice-specific random access;
the intended slice of the terminal device is not the specific slice and/or does not belong to the slice group corresponding to the slice-specific random access;
the intended slice of the terminal device is not the specific slice and/or does not belong to the slice corresponding to the slice-specific random access;
the intended slice of the terminal device is not the specific slice and/or is not the same as the slice corresponding to the configuration parameter for the slice-specific random access;
the intended slice of the terminal device is not the specific slice and/or does not belong to the slice group corresponding to the configuration parameter for the slice-specific random access;
the terminal device is not configured with a resource for the slice-specific random access;
the terminal device does not support the slice-specific random access;
the terminal device and/or network device is not a specific version or the terminal device and/or network device is an entity that does not support a specific capability;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service.

Optionally, in a case where the legacy random access includes the 2-step legacy random access and the 4-step legacy random access, the first random access type which is prioritized to be selected is the 2-step legacy random access.

Optionally, selection of the 2-step legacy random access is prioritized when at least one of the following cases is met:
a channel quality is greater than or equal to a fourth threshold value;
the channel quality is less than a fifth threshold value but greater than a sixth threshold value; or
the terminal device is configured with a resource for the 2-step legacy random access.

Optionally, in response to that an access attempt using the 2-step legacy random access fails or the maximum number of attempts is reached, the terminal device considers that a random access procedure is not successfully completed, or indicates a random access problem to a higher layer;
or,
in response to that the access attempt using the 2-step legacy random access fails or the maximum number of attempts is reached, the terminal device selects a second random access type to try to access.

Optionally, the second random access type is the 4-step legacy random access, or the second random access type is the slice-specific random access.

Optionally, the second random access type is the slice-specific random access when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the 2-step legacy random access is not configured, the first random access type which is prioritized to be selected is the 4-step legacy random access.

Optionally, the first random access type which is prioritized to be selected is the slice-specific random access or the 4-step legacy random access when at least one of the following cases is met:
an intended slice of the terminal device is a specific slice;
the intended slice of the terminal device corresponds to a specific logical channel, or corresponds to a specific logical channel group, or corresponds to a logical channel of a specific priority, or corresponds to a logical channel group of a specific priority, or corresponds to a specific service;
the terminal device and/or network device is a specific version or an entity supporting a specific capability;
the terminal device is not configured with a resource for the 2-step legacy random access; or
the terminal device obtains the intended slice.

Optionally, the first random access type which is prioritized to be selected is the 2-step slice-specific random access in the slice-specific random access when at least one of the following cases is met:
a channel quality is greater than or equal to a first threshold value;
the channel quality is less than a second threshold value but greater than a third threshold value;
the intended slice of the terminal device is a specific slice;
the intended slice of the terminal device corresponds to a specific logical channel, or corresponds to a specific logical channel group, or corresponds to a logical channel of a specific priority, or corresponds to a logical channel group of a specific priority, or corresponds to a specific service;
the random access is on UL or SUL;
the terminal device and/or network device is a specific version or an entity supporting a specific capability;
the terminal device is configured with a resource for the 2-step slice-specific random access; or
the terminal device is not configured with a resource for the 4-step legacy random access.

Optionally, in a case where the 4-step legacy random access is not configured, the first random access type which is prioritized to be selected is the slice-specific random access.

Optionally, the plurality of random access types are selected in a descending order of priority: the 2-step legacy random access, the 4-step legacy random access, the 2-step slice-specific random access, and the 4-step slice-specific random access.

In an example embodiment, the first random access type which is prioritized to be selected is 2-step random access.

Optionally, selection of the 2-step random access is prioritized when at least one of the following cases is met:
a channel quality is greater than or equal to a seventh threshold value;
the channel quality is less than an eighth threshold value but greater than a ninth threshold value;
the terminal device is configured with a resource for the 2-step random access;
the terminal device supports the 2-step random access;
an intended slice of the terminal device is a specific slice or slice group;
the random access is on UL or SUL;
the terminal device and/or network device is a specific version or an entity supporting a specific capability;
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in response to that an access attempt using the 2-step random access fails or the maximum number of attempts is reached, the terminal device considers that a random access procedure is not successfully completed, or indicates a random access problem to a higher layer;
or,
in response to that the access attempt using the 2-step random access fails or the maximum number of attempts is reached, the terminal device selects 4-step random access to try to access.

Optionally, in a case where the plurality of random access types include the 2-step slice-specific random access, the first random access type which is prioritized to be selected is the 2-step slice-specific random access.

Optionally, selection of the 2-step slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device is configured with a resource for the 2-step slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the plurality of random access types do not include the 2-step slice-specific random access, the first random access type which is prioritized to be selected is the 2-step legacy random access.

Optionally, the first random access type which is prioritized to be selected is the 2-step legacy random access when at least one of the following cases is met:
an intended slice for the terminal device is not obtained;
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 2-step slice-specific random access;
the terminal device is configured with a resource for the 2-step legacy random access;
a channel quality is greater than or equal to a fourth threshold value; and
the channel quality is less than a fifth threshold value but greater than a sixth threshold value.

Optionally, the plurality of random access types are selected in a descending order of priority as follows: the 2-step slice-specific random access, the 2-step legacy random access, the 4-step slice-specific random access, and the 4-step legacy random access.

In an example embodiment, the first random access type which is prioritized to be selected is 4-step random access.

Optionally, selection of the 4-step random access is prioritized when at least one of the following cases is met:
a channel quality is less than a seventh threshold value;
the channel quality is greater than an eighth threshold value or less than a ninth threshold value;
the terminal device is not configured with a resource for 2-step random access;
the terminal device does not support the 2-step random access;
an intended slice for the terminal device is not a specific slice or slice group;
the random access is not on the UL or the SUL;
the terminal device or network device is not a specific version or the terminal device or network device is an entity that does not support a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in response to that an access attempt using the 4-step random access fails or the maximum number of attempts is reached, the terminal device considers that a random access procedure is not successfully completed, or indicates a random access problem to a higher layer;
or,
in response to that the access attempt using the 4-step random access fails or the maximum number of attempts is reached, the terminal device selects 2-step random access to try to access.

Optionally, in a case where the plurality of random access types include the 4-step slice-specific random access, the first random access type which is prioritized to be selected is the 4-step slice-specific random access.

Optionally, selection of the 4-step slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device is configured with a resource for the slice-specific4-step random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the plurality of random access types do not include the 4-step slice-specific random access, the first random access type which is prioritized to be selected is the 4-step legacy random access.

Optionally, the first random access type which is prioritized to be selected is the 4-step legacy random access when at least one of the following cases is met:
an intended slice for the terminal device is not obtained;
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 4-step slice-specific random access;
the terminal device is configured with a resource for the 4-step legacy random access;
a channel quality is less than a fourth threshold value; and
the channel quality is greater than or equal to a fifth threshold value or the channel quality is less than or equal to a sixth threshold value.

Optionally, the plurality of random access types are selected in a descending order of priority: the 4-step slice-specific random access, the 4-step legacy random access, the 2-step slice-specific random access and the 2-step legacy random access.

In an example embodiment, the terminal device is further configured with at least one set of following threshold values:
a first threshold value used to determine to prioritize selection one of the 2-step slice-specific random access and the 4-step slice-specific random access based on a magnitude relationship between a channel quality and the first threshold value;
a second threshold value and a third threshold value used to determine to prioritize selection one of the 2-step slice-specific random access and the 4-step slice-specific random access based on a magnitude relationship between a channel quality and the second and the third threshold values;
a fourth threshold value used to determine to prioritize selection one of the 2-step legacy random access and the 4-step legacy random access based on a magnitude relationship between a channel quality and the fourth threshold value;
a fifth threshold value and a sixth threshold value used to determine to prioritize selection one of the 2-step legacy random access and the 4-step legacy random access based on a magnitude relationship between a channel quality and the fifth and threshold values;
a seventh threshold value used to determine to prioritize selection one of 2-step random access and 4-step random access based on a magnitude relationship between a channel quality and the seventh threshold value; and
an eighth threshold value and a ninth threshold value used to determine to prioritize selection one of the 2-step random access and the 4-step random access based on a magnitude relationship between a channel quality and the eighth and ninth threshold values.

In an example embodiment, the threshold values are:
individually configured for each slice;
or, individually configured for each slice group;
or, individually configured for each access type;
or, common.

In an example embodiment, among the plurality of random access types, there is at least one random access type configured with a corresponding maximum number of attempts, and/or, there is a maximum number of attempts for all random access types.

In an example embodiment, among the plurality of random access types, the slice-specific random access is configured with a corresponding maximum number of attempts;
and/or,
among the plurality of random access types, the legacy random access is configured with a corresponding maximum number of attempts.

In an example embodiment, among the plurality of random access types, 2-step random access is configured with a corresponding maximum number of attempts;
and/or,
among the plurality of random access types, 4-step random access is configured with a corresponding maximum number of attempts.

In an example embodiment, among the plurality of random access types, each random access type is configured with a corresponding maximum number of attempts.

In an example embodiment, the plurality of random access types include a contention-based random access.

In an example embodiment, the intended slice is an intended single slice, or the intended slice is an intended slice group, or the intended slice is a slice or slice group corresponding to an intended parameter, or the intended slice is an intended parameter.

FIG. 4 is a block diagram of a random access type selection apparatus provided by another embodiment of the present disclosure. The apparatus has a function to implement the method embodiments at the network device side described above, and the function may be implemented by hardware or by hardware executing corresponding software. The apparatus may be the network device as described above, or may be provided in the network device. As shown in FIG. 4, the apparatus 400 may include a sending module 410.

The sending module 410 is configured to send random access configuration information to a terminal device, wherein the random access configuration information is used to configure a plurality of random access types for the terminal device to select from, and the terminal device is used to prioritize selection of a first random access type from the plurality of random access types to try to access.

The plurality of random access types include legacy random access and slice-specific random access, the legacy random access includes 2-step legacy random access and/or 4-step legacy random access, and the slice-specific random access includes 2-step slice-specific random access and/or 4-step slice-specific random access.

In an example embodiment, the first random access type which is prioritized to be selected is the slice-specific random access.

Optionally, selection of the slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the slice-specific random access includes the 2-step slice-specific random access and the 4-step slice-specific random access, the first random access type which is prioritized to be selected is the 2-step slice-specific random access.

Optionally, selection of the 2-step slice-specific random access is prioritized when at least one of the following cases is met:
a channel quality is greater than or equal to a first threshold value;
the channel quality is less than a second threshold value but greater than a third threshold value;
the intended slice of the terminal device is the specific slice;
the intended slice of the terminal device corresponds to the specific logical channel, or corresponds to the specific logical channel group, or corresponds to the logical channel of the specific priority, or corresponds to the logical channel group of the specific priority, or corresponds to the specific service;
the random access is on an uplink (UL) or a Supplementary Uplink (SUL);
the terminal device and/or network device is the specific version or the entity supporting the specific capability; or
the terminal device is configured with a resource for the 2-step slice-specific random access.

Optionally, in a case where an access attempt using the 2-step slice-specific random access fails or the maximum number of attempts is reached, the terminal device considers that a random access procedure is not successfully completed, or indicates a random access problem to a higher layer;
or,
in a case where the access attempt using the 2-step slice-specific random access fails or the maximum number of attempts is reached, the terminal selects a second random access type to try to access.

Optionally, the second random access type is the 4-step slice-specific random access, or the second random access type is the legacy random access.

Optionally, the second random access type is the 2-step legacy random access in the legacy random access when at least one of the following cases is met:
the channel quality is greater than or equal to a fourth threshold value;
the channel quality is less than a fifth threshold value but greater than a sixth threshold value; or
the terminal device is configured with a resource for the 2-step legacy random access.

Optionally, in a case where the 2-step slice-specific random access is not configured, the first random access type which is prioritized to be selected is the 4-step slice-specific random access.

Optionally, the first random access type which is prioritized to be selected is the legacy random access or the slice-specific 4-step random when at least one of the following cases is met:
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 2-step slice-specific random access; or
the intended slice of the terminal is not obtained.

Optionally, the first random access type which is prioritized to be selected is the 2-step legacy random access in the legacy random access when at least one of the following cases is met:
the channel quality is greater than or equal to a fourth threshold value;
the channel quality is less than a fifth threshold value but greater than a sixth threshold value;
the terminal device is configured with a resource for the 2-step legacy random access; or
the terminal device is not configured with a resource for the 4-step slice-specific random access.

Optionally, in a case where the 4-step slice-specific random access is not configured, the first random access type which is prioritized to be selected is the legacy random access.

Optionally, the plurality of random access types are selected in a descending order of priority as follows: the 2-step slice-specific random access, the 4-step slice-specific random access, the 2-step legacy random access, and the 4-step legacy random access.

In an example embodiment, the first random access type which is prioritized to be selected is the legacy random access.

Optionally, selection of the legacy random access is prioritized when at least one of the following cases is met:
the terminal device does not obtain an intended slice;
the intended slice of the terminal device is not the same as a slice corresponding to the slice-specific random access;
the intended slice of the terminal device does not belong to the slice corresponding to the slice-specific random access;
the intended slice of the terminal device does not belong to a slice group corresponding to the slice-specific random access;
the intended slice of the terminal device is not the same as a slice corresponding to a configuration parameter for the slice-specific random access;
the intended slice of the terminal device does not belong to a slice group corresponding to the configuration parameter for the slice-specific random access;
the intended slice of the terminal device is not a specific slice;
the intended slice of the terminal device is not the specific slice and/or is not the same as the slice corresponding to the slice-specific random access;
the intended slice of the terminal device is not the specific slice and/or does not belong to the slice group corresponding to the slice-specific random access;
the intended slice of the terminal device is not the specific slice and/or does not belong to the slice corresponding to the slice-specific random access;
the intended slice of the terminal device is not the specific slice and/or is not the same as the slice corresponding to the configuration parameter for the slice-specific random access;
the intended slice of the terminal device is not the specific slice and/or does not belong to the slice group corresponding to the configuration parameter for the slice-specific random access;
the terminal device is not configured with a resource for the slice-specific random access;
the terminal device does not support the slice-specific random access;
the terminal device and/or network device is not a specific version or the terminal device and/or network device is an entity that does not support a specific capability;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service.

Optionally, in a case where the legacy random access includes the 2-step legacy random access and the 4-step legacy random access, the first random access type which is prioritized to be selected is the 2-step legacy random access.

Optionally, selection of the 2-step legacy random access is prioritized when at least one of the following cases is met:
a channel quality is greater than or equal to a fourth threshold value;
the channel quality is less than a fifth threshold value but greater than a sixth threshold value; or
the terminal device is configured with a resource for the 2-step legacy random access.

Optionally, in a case where the access attempt using the 2-step legacy random access fails or the maximum number of attempts is reached, the terminal device considers that a random access procedure is not successfully completed, or indicates a random access problem to a higher layer;
or,
in a case where the access attempt using the 2-step legacy random access fails or the maximum number of attempts is reached, the terminal device selects a second random access type to try to access.

Optionally, the second random access type is the 4-step legacy random access, or the second random access type is the slice-specific random access.

Optionally, the second random access type is the slice-specific random access when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the 2-step legacy random access is not configured, the first random access type which is prioritized to be selected is the 4-step legacy random access.

Optionally, the first random access type which is prioritized to be selected is the slice-specific random access or the 4-step legacy random access when at least one of the following cases is met:
an intended slice of the terminal device is a specific slice;
the intended slice of the terminal device corresponds to a specific logical channel, or corresponds to a specific logical channel group, or corresponds to a logical channel of a specific priority, or corresponds to a logical channel group of a specific priority, or corresponds to a specific service;
the terminal device and/or network device is a specific version or an entity supporting a specific capability;
the terminal device is not configured with a resource for the 2-step legacy random access; or
the terminal device obtains the intended slice.

Optionally, the first random access type which is prioritized to be selected is the 2-step slice-specific random access in the slice-specific random access when at least one of the following cases is met:
a channel quality is greater than or equal to a first threshold value;
the channel quality is less than a second threshold value but greater than a third threshold value;
the intended slice of the terminal device is a specific slice;
the intended slice of the terminal device corresponds to a specific logical channel, or corresponds to a specific logical channel group, or corresponds to a logical channel of a specific priority, or corresponds to a logical channel group of a specific priority, or corresponds to a specific service;
the random access is on UL or SUL;
the terminal device and/or network device is a specific version or an entity supporting a specific capability;
the terminal device is configured with a resource for the 2-step slice-specific random access; or
the terminal device is not configured with a resource for the 4-step legacy random access.

Optionally, in a case where the 4-step legacy random access is not configured, the first random access type which is prioritized to be selected is the slice-specific random access.

Optionally, the plurality of random access types are selected in a descending order of priority: the 2-step legacy random access, the 4-step legacy random access, the 2-step slice-specific random access, and the 4-step slice-specific random access.

In an example embodiment, the first random access type which is prioritized to be selected is 2-step random access.

Optionally, selection of the 2-step random access is prioritized when at least one of the following cases is met:
a channel quality is greater than or equal to a seventh threshold value;
the channel quality is less than an eighth threshold value but greater than a ninth threshold value;
the terminal device is configured with a resource for the 2-step random access;
the terminal device supports the 2-step random access;
an intended slice of the terminal device is a specific slice or slice group;
the random access is on UL or SUL;
the terminal device and/or network device is a specific version or an entity supporting a specific capability;
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, if the access attempt using the 2-step random access fails or the maximum number of attempts is reached, the terminal device considers that a random access procedure is not successfully completed, or a random access problem is indicated to a higher layer;
or,
if the access attempt using the 2-step random access fails or the maximum number of attempts is reached, the terminal device selects 4-step random access to try to access.

Optionally, in a case where the plurality of random access types include the 2-step slice-specific random access, the first random access type which is prioritized to be selected is the 2-step slice-specific random access.

Optionally, selection of the 2-step slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device is configured with a resource for the 2-step slice-specific random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the plurality of random access types do not include the 2-step slice-specific random access, the first random access type which is prioritized to be selected is the 2-step legacy random access.

Optionally, the first random access type which is prioritized to be selected is the 2-step legacy random access when at least one of the following cases is met:
an intended slice for the terminal device is not obtained;
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 2-step slice-specific random access;
the terminal device is configured with a resource for the 2-step legacy random access;
a channel quality is greater than or equal to a fourth threshold value; and
the channel quality is less than a fifth threshold value but greater than a sixth threshold value.

Optionally, the plurality of random access types are selected in a descending order of priority as follows: the 2-step slice-specific random access, the 2-step legacy random access, the 4-step slice-specific random access, and the 4-step legacy random access.

In an example embodiment, the first random access type which is prioritized to be selected is 4-step random access.

Optionally, selection of the 4-step random access is prioritized when at least one of the following cases is met:
a channel quality is less than a seventh threshold value;
the channel quality is greater than an eighth threshold value or less than a ninth threshold value;
the terminal device is not configured with a resource for 2-step random access;
the terminal device does not support the 2-step random access;
an intended slice for the terminal device is not a specific slice or slice group;
the random access is not on the UL or the SUL;
the terminal device or network device is not a specific version or the terminal device or network device is an entity that does not support a specific capability; or
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service.

Optionally, if an access attempt using the 4-step random access fails or the maximum number of attempts is reached, the terminal device considers that a random access procedure is not successfully completed, or indicates a random access problem to a higher layer;
or,
if the access attempt using the 4-step random access fails or the maximum number of attempts is reached, the terminal device selects 2-step random access to try to access.

Optionally, in a case where the plurality of random access types include the 4-step slice-specific random access, the first random access type which is prioritized to be selected is the 4-step slice-specific random access.

Optionally, selection of the 4-step slice-specific random access is prioritized when at least one of the following cases is met:
the terminal device obtains an intended slice;
an intended slice of the terminal device is the same as a slice corresponding to the slice-specific random access;
the intended slice of the terminal device belongs to the slice corresponding to the slice-specific random access;
the intended slice of the terminal device belongs to a slice group corresponding to the slice-specific random access;
the intended slice of the terminal device is the same as a slice corresponding to a configuration parameter for the slice-specific random access;
the intended slice of the terminal device belongs to a slice group corresponding to the configuration parameter for the slice-specific random access;
the intended slice of the terminal device is a specific slice;
the intended slice of the terminal device is the specific slice and is the same as the slice corresponding to the slice-specific random access;
the intended slice of the terminal device is the specific slice and belongs to the slice group corresponding to the slice-specific random access;
the intended slice of the terminal device is the specific slice and belongs to the slice corresponding to the slice-specific random access;
the intended slice of the terminal device is the specific slice and is the same as the slice corresponding to the configuration parameter for the slice-specific random access;
the intended slice of the terminal device is the specific slice and belongs to the slice group corresponding to the configuration parameter for the slice-specific random access;
the terminal device is configured with a resource for the slice-specific random access;
the terminal device is configured with a resource for the slice-specific4-step random access;
the terminal device supports the slice-specific random access;
the terminal device and/or a network device is a specific version or an entity supporting a specific capability; or
the intended slice of the terminal device corresponds to a specific logical channel, or corresponds to a specific logical channel group, or corresponds to a logical channel of a specific priority, or corresponds to a logical channel group of a specific priority, or corresponds to a specific service.

Optionally, in a case where the plurality of random access types do not include the 4-step slice-specific random access, the first random access type which is prioritized to be selected is the 4-step legacy random access.

Optionally, the first random access type which is prioritized to be selected is the 4-step legacy random access when at least one of the following cases is met:
an intended slice for the terminal device is not obtained;
the intended slice of the terminal device is not a specific slice;
the intended slice of the terminal device does not correspond to a specific logical channel, or does not correspond to a specific logical channel group, or does not correspond to a logical channel of a specific priority, or does not correspond to a logical channel group of a specific priority, or does not correspond to a specific service;
the terminal device and/or network device is not a specific version or the terminal device and/or network device is an entity that does not support a specific capability;
the terminal device is not configured with a resource for the 4-step slice-specific random access;
the terminal device is configured with a resource for the 4-step legacy random access;
a channel quality is less than a fourth threshold value; and
the channel quality is greater than or equal to a fifth threshold value or the channel quality is less than or equal to a sixth threshold value.

Optionally, the plurality of random access types are selected in a descending order of priority: the 4-step slice-specific random access, the 4-step legacy random access, the 2-step slice-specific random access and the 2-step legacy random access.

In an example embodiment, the random access configuration information further includes at least one set of following threshold values:
a first threshold value used to determine to prioritize selection one of the 2-step slice-specific random access and the 4-step slice-specific random access based on a magnitude relationship between a channel quality and the first threshold value;
a second threshold value and a third threshold value used to determine to prioritize selection one of the 2-step slice-specific random access and the 4-step slice-specific random access based on a magnitude relationship between a channel quality and the second and the third threshold values;
a fourth threshold value used to determine to prioritize selection one of the 2-step legacy random access and the 4-step legacy random access based on a magnitude relationship between a channel quality and the fourth threshold value;
a fifth threshold value and a sixth threshold value used to determine to prioritize selection one of the 2-step legacy random access and the 4-step legacy random access based on a magnitude relationship between a channel quality and the fifth and threshold values;
a seventh threshold value used to determine to prioritize selection one of 2-step random access and 4-step random access based on a magnitude relationship between a channel quality and the seventh threshold value; and
an eighth threshold value and a ninth threshold value used to determine to prioritize selection one of the 2-step random access and the 4-step random access based on a magnitude relationship between a channel quality and the eighth and ninth threshold values.

In an example embodiment, the threshold values are:
individually configured for each slice;
or, individually configured for each slice group;
or, individually configured for each access type;
or, common.

In an example embodiment, among the plurality of random access types, there is at least one random access type configured with a corresponding maximum number of attempts, and/or, there is a maximum number of attempts for all random access types.

In an example embodiment, among the plurality of random access types, the slice-specific random access is configured with a corresponding maximum number of attempts;
and/or,
among the plurality of random access types, the legacy random access is configured with a corresponding maximum number of attempts.

In an example embodiment, among the plurality of random access types, 2-step random access is configured with a corresponding maximum number of attempts;
and/or,
among the plurality of random access types, 4-step random access is configured with a corresponding maximum number of attempts.

In an example embodiment, among the plurality of random access types, each random access type is configured with a corresponding maximum number of attempts.

In an example embodiment, the plurality of random access types include a contention-based random access.

In an example embodiment, the intended slice is an intended single slice, or the intended slice is an intended slice group, or the intended slice is a slice or slice group corresponding to an intended parameter, or the intended slice is an intended parameter.

It should be noted that when the apparatuses provided by the above embodiments realize their functions, the division of the above-mentioned functional modules is only used as an example for illustration. In practical applications, the above-mentioned function allocation can be completed by different functional modules according to actual needs. That is, the content structure of the apparatuses is divided into different functional modules to complete all or part of the functions described above.

Regarding the apparatuses in the foregoing embodiments, the specific manner in which each module executes operations has been described in detail in the embodiments related to the methods, and will not be described in detail here.

FIG. 5 shows a schematic structural diagram of a terminal device 50 provided by an embodiment of the present disclosure. The terminal device 50 may include: a processor 51, a receiver 52, a transmitter 53, a memory 54 and a bus 55.

The processor 51 includes one or more processing cores, and the processor 51 executes various functional applications and information processing by running software programs and modules.

The receiver 52 and the transmitter 53 may be implemented as a transceiver 56, which may be a communication chip.

The memory 54 is connected to the processor 51 through the bus 55.

The memory 54 may be used to store a computer program, and the processor 51 is used to execute the computer program, so as to implement various steps performed by the terminal device in the above method embodiments.

In addition, the memory 54 may be realized by any type of volatile or non-volatile storage device or their combination. The volatile or non-volatile storage device includes but not limited to: Random-Access Memory (RAM) and Read-Only Memory (ROM), Erasable Programmable Read-Only Memory (EPROM), Electrically Erasable Programmable Read-Only Memory (EEPROM), flash memory or other solid-state storage technology, Compact Disc Read-Only Memory (CD-ROM), Digital Video Disc (DVD, high-density digital video disc) or other optical storage, tape cartridge, tape, magnetic disk storage or other magnetic storage device.

In an example embodiment, the processor 51 is configured to, in a case where a plurality of random access types are configured for the terminal device, prioritize selection of a first random access type from the plurality of random access types to try to access;

wherein the plurality of random access types include legacy random access and slice-specific random access, the legacy random access includes 2-step legacy random access and/or 4-step legacy random access, and the slice-specific random access includes 2-step slice-specific random access and/or 4-step slice-specific random access

In addition, the terminal device 50 is also configured to execute other method steps related to the terminal device in the above embodiments, which will not be repeated here.

FIG. 6 which shows a schematic structural diagram of a network device 60 provided by an embodiment of the present disclosure. The network device 60 may include: a processor 61, a receiver 62, a transmitter 63, a memory 64 and a bus 65.

The processor 61 includes one or more processing cores, and the processor 61 executes various functional applications and information processing by running software programs and modules.

The receiver 62 and the transmitter 63 may be realized as a transceiver 66, and the transceiver 66 may be a communication chip.

The memory 64 is connected to the processor 61 through the bus 65.

The memory 64 may be used to store a computer program, and the processor 61 is used to execute the computer program, so as to implement various steps performed by the network device in the foregoing method embodiments.

In addition, the memory 64 may be realized by any type of volatile or non-volatile storage device or their combination. The volatile or non-volatile storage device includes but not limited to: Random-Access Memory (RAM) and Read-Only Memory (ROM), Erasable Programmable Read-Only Memory (EPROM), Electrically Erasable Programmable Read-Only Memory (EEPROM), flash memory or other solid-state storage technology, Compact Disc Read-Only Memory (CD-ROM), Digital Video Disc (DVD, high-density digital video disc) or other optical storage, tape cartridge, tape, magnetic disk storage or other magnetic storage device.

In an example embodiment, the transceiver 66 is configured to send random access configuration information to a network device, wherein the random access configuration information is used to configure a plurality of random access types for the network device to select from, and the network device is used to prioritize selection of a first random access type from the plurality of random access types to try to access;
wherein the plurality of random access types include legacy random access and slice-specific random access, the legacy random access includes 2-step legacy random access and/or 4-step legacy random access, and the slice-specific random access includes 2-step slice-specific random access and/or 4-step slice-specific random access.

In addition, the network device 60 is also configured to execute other method steps related to the network device in the above embodiments, which will not be repeated here.

An embodiment of the present disclosure further provides a computer-readable storage medium, where a computer program is stored in the storage medium, and the computer program is used to be executed by a processor of a terminal device, so as to implement the above-mentioned random access type selection method at the terminal device side.

An embodiment of the present disclosure further provides a computer-readable storage medium, where a computer program is stored in the storage medium, and the computer program is used to be executed by a processor of a network device, so as to implement the above-mentioned random access type selection at method the network device side.

An embodiment of the present disclosure further provides a chip. The chip includes a programmable logic circuit and/or program instructions, and when the chip is run on the terminal device, it is used to implement the random access type selection method at the terminal device side.

An embodiment of the present disclosure also provides a chip. The chip includes a programmable logic circuit and/or program instructions, and when the chip is run on the network device, it is used to implement the random access type selection method at the network device side.

An embodiment of the present disclosure further provides a computer program product. When the computer program product is run on a processor of a terminal device, the terminal device is caused to perform the random access type selection method at the terminal device side.

An embodiment of the present disclosure further provides a computer program product. When the computer program product is run on a processor of a network device, the network device is caused to perform the random access type selection method at the network device side.

Those skilled in the art should understand that, in the foregoing one or more examples, the functions described in the embodiments of the present disclosure may be implemented by hardware, software, firmware or any combination thereof. When implemented in software, the functions may be stored on a computer-readable medium or transmitted over as one or more instructions or codes on a computer-readable medium. The computer-readable medium includes both a computer storage medium and a communication medium including any medium that facilitates transfer of a computer program from one place to another. The storage medium may be any available medium that can be accessed by a general purpose or special purpose computer.

It should be understood that the "plurality of" mentioned herein refers to two or more than two. The term "and/or" describes an association relationship of associated objects, indicating that there may be three types of relationships. For example, A and/or B may indicate: A alone, B alone, and A and B together. The character "/" generally indicates that the contextual objects are an "or" relationship. When "at least one of the following cases is met..." is mentioned herein, the "at least one case" may be reasonably combined by those skilled in the art according to various cases listed above, which is not limited in the present disclosure.

The above are only example embodiments of the present disclosure, and are not intended to limit the present disclosure.

## Claims

1. A random access type selection method, applied to a terminal device (300), and the method comprising:
in a case where a plurality of random access types are configured for the terminal device (300), prioritizing (210) selection of a first random access type from the plurality of random access types to try to access;
wherein the plurality of random access types comprise legacy random access and slice-specific random access, the legacy random access comprises 2-step legacy random access and/or 4-step legacy random access, and the slice-specific random access comprises 2-step slice-specific random access and/or 4-step slice-specific random access;
**characterized in that**
the first random access type which is prioritized to be selected is the slice-specific random access;
wherein selection of the slice-specific random access is prioritized when at least one of the following cases is met:
the terminal device (300) obtains an intended slice;
an intended slice of the terminal device (300) is the same as a slice corresponding to the slice-specific random access;
the terminal device (300) is configured with a resource for the slice-specific random access; and
the terminal device (300) supports the slice-specific random access.

2. The method according to claim 1, wherein in a case where the slice-specific random access comprises the 2-step slice-specific random access and the 4-step slice-specific random access, the first random access type which is prioritized to be selected is the 2-step slice-specific random access;
wherein selection of the 2-step slice-specific random access is prioritized when the following case is met:
a channel quality is greater than or equal to a first threshold value.

3. The method according to claim 2, further comprising:
in response to that the access attempt using the 2-step slice-specific random access fails or the maximum number of attempts is reached, selecting a second random access type to try to access;
wherein the second random access type is the 4-step slice-specific random access.

4. The method according to any one of claims 1 to 3, wherein in a case where the 2-step slice-specific random access is not configured, the first random access type which is prioritized to be selected is the 4-step slice-specific random access.

5. The method according to any one of claims 1 to 3, wherein the first random access type which is prioritized to be selected is the legacy random access or the slice-specific 4-step random when at least one of the following cases is met:
the terminal device (300) is not configured with a resource for the 2-step slice-specific random access; and
the intended slice of the terminal is not obtained;
wherein the first random access type which is prioritized to be selected is the 2-step legacy random access in the legacy random access when at least one of the following cases is met:
the channel quality is greater than or equal to a fourth threshold value;
the terminal device (300) is configured with a resource for the 2-step legacy random access.

6. The method according to any one of claims 1 to 3, wherein the plurality of random access types are selected in a descending order of priority as follows: the 2-step slice-specific random access, the 4-step slice-specific random access, the 2-step legacy random access, and the 4-step legacy random access.

7. A terminal device (300), configured to perform the method according to any one of claims 1 to 6.

## Patentansprüche

1. Direktzugriffstypauswahlverfahren, das auf eine Endgeräteinrichtung (300) angewendet wird, wobei das Verfahren Folgendes umfasst:
wenn eine Vielzahl von Direktzugriffstypen für die Endgeräteinrichtung (300) konfiguriert ist, Priorisieren (210) einer Auswahl eines ersten Direktzugriffstyps aus der Vielzahl von Direktzugriffstypen, um einen Zugriff zu versuchen;
wobei die Vielzahl von Direktzugriffstypen einen herkömmlichen Direktzugriff und einen Slice-spezifischen Direktzugriff umfasst, der herkömmliche Direktzugriff einen 2-stufigen herkömmlichen Direktzugriff und/oder einen 4-stufigen herkömmlichen Direktzugriff umfasst und der Slice-spezifische Direktzugriff einen 2-stufigen Slice-spezifischen Direktzugriff und/oder einen 4-stufigen Slice-spezifischen Direktzugriff umfasst;
**dadurch gekennzeichnet, dass** der erste Direktzugriffstyp, der priorisiert wird, um ausgewählt zu werden, der Slice-spezifische Direktzugriff ist;
wobei eine Auswahl des Slice-spezifischen Direktzugriffs priorisiert wird, wenn mindestens einer der folgenden Fälle eintritt:
die Endgeräteinrichtung (300) erhält ein vorgesehenes Slice;
ein vorgesehenes Slice der Endgeräteinrichtung (300) ist dasselbe wie ein mit dem Slice-spezifischen Direktzugriff korrespondierendes Slice;
die Endgeräteinrichtung (300) ist mit einer Ressource für den Slice-spezifischen Direktzugriff konfiguriert; und
die Endgeräteinrichtung (300) unterstützt den Slice-spezifischen Direktzugriff.

2. Verfahren nach Anspruch 1, wobei, wenn der Slice-spezifische Direktzugriff den 2-stufigen Slice-spezifischen Direktzugriff und den 4-stufigen Slice-spezifischen Direktzugriff umfasst, der erste Direktzugriffstyp, der priorisiert wird, um ausgewählt zu werden, der 2-stufige Slice-spezifische Direktzugriff ist;
wobei eine Auswahl des 2-stufigen Slice-spezifischen Direktzugriffs priorisiert wird, wenn der folgende Fall eintritt:
eine Kanalqualität ist größer als oder gleich einem ersten Schwellenwert.

3. Verfahren nach Anspruch 2, das ferner Folgendes umfasst:
als Reaktion darauf, dass der Zugriffsversuch unter Nutzung des 2-stufigen Slice-spezifischen Direktzugriffs fehlschlägt oder die maximale Anzahl von Versuchen erreicht wird, Auswählen eines zweiten Direktzugriffstyps, um einen Zugriff zu versuchen;
wobei der zweite Direktzugriffstyp der 4-stufige Slice-spezifische Direktzugriff ist.

4. Verfahren nach einem der Ansprüche 1 bis 3, wobei, wenn der 2-stufige Slice-spezifische Direktzugriff nicht konfiguriert ist, der erste Direktzugriffstyp, der priorisiert wird, um ausgewählt zu werden, der 4-stufige Slice-spezifische Direktzugriff ist.

5. Verfahren nach einem der Ansprüche 1 bis 3, wobei der erste Direktzugriffstyp, der priorisiert wird, um ausgewählt zu werden, der herkömmliche Direktzugriff oder der Slice-spezifische 4-stufige Direktzugriff ist, wenn mindestens einer der folgenden Fälle vorliegt:
die Endgeräteinrichtung (300) ist nicht mit einer Ressource für den 2-stufigen Slice-spezifischen Direktzugriff konfiguriert; und
das vorgesehene Slice des Endgeräts wird nicht erhalten;
wobei der erste Direktzugriffstyp, der priorisiert wird, um ausgewählt zu werden, der 2-stufige herkömmliche Direktzugriff in dem herkömmlichen Direktzugriff ist, wenn mindestens einer der folgenden Fälle vorliegt:
die Kanalqualität ist größer als oder gleich einem vierten Schwellenwert;
die Endgeräteinrichtung (300) ist mit einer Ressource für den 2-stufigen herkömmlichen Direktzugriff konfiguriert.

6. Verfahren nach einem der Ansprüche 1 bis 3, wobei die Vielzahl von Direktzugriffstypen in einer absteigenden Reihenfolge von Prioritäten wie folgt ausgewählt wird: des 2-stufigen Slice-spezifischen Direktzugriffs, des 4-stufigen Slice-spezifischen Direktzugriffs, des 2-stufigen herkömmlichen Direktzugriffs und des 4-stufigen herkömmlichen Direktzugriffs.

7. Endgeräteinrichtung (300), die konfiguriert ist, um das Verfahren nach einem der Ansprüche 1 bis 6 durchzuführen.

## Revendications

1. Procédé de sélection de type d'accès aléatoire, appliqué à un dispositif de terminal (300), et le procédé comprenant :
au cas où une pluralité de types d'accès aléatoire sont configurés pour le dispositif de terminal (300), le classement par ordre de priorité (210) d'une sélection d'un premier type d'accès aléatoire parmi la pluralité de types d'accès aléatoire pour essayer d'accéder ;
dans lequel la pluralité de types d'accès aléatoire comprennent un accès aléatoire patrimonial et un accès aléatoire spécifique de créneau, l'accès aléatoire patrimonial comprend un accès aléatoire patrimonial à 2 étapes et/ou un accès aléatoire patrimonial à 4 étapes, et l'accès aléatoire spécifique de créneau comprend un accès aléatoire spécifique de créneau à 2 étapes et/ou un accès aléatoire spécifique de créneau à 4 étapes ;
**caractérisé en ce que**
le premier type d'accès aléatoire auquel la priorité est donnée pour la sélection est l'accès aléatoire spécifique de créneau ;
dans lequel la priorité est donnée à la sélection de l'accès aléatoire spécifique de créneau lorsqu'au moins un des cas suivants est respecté :
le dispositif de terminal (300) obtient un créneau prévu ;
un créneau prévu du dispositif de terminal (300) est le même qu'un créneau correspondant à l'accès aléatoire spécifique de créneau ;
le dispositif de terminal (300) est configuré avec une ressource pour l'accès aléatoire spécifique de créneau ; et
le dispositif de terminal (300) prend en charge l'accès aléatoire spécifique de créneau.

2. Procédé selon la revendication 1, dans lequel, au cas où l'accès aléatoire spécifique de créneau comprend l'accès aléatoire spécifique de créneau à 2 étapes et l'accès aléatoire spécifique de créneau à 4 étapes, le premier type d'accès aléatoire auquel la priorité est donnée pour la sélection est l'accès aléatoire spécifique de créneau à 2 étapes ;
dans lequel la priorité est donnée à la sélection de l'accès aléatoire spécifique de créneau à 2 étapes lorsque le cas suivant est respecté :
une qualité de canal est supérieure ou égale à une première valeur seuil.

3. Procédé selon la revendication 2, comprenant en outre :
en réponse au fait que la tentative d'accès en utilisant l'accès aléatoire spécifique de créneau à 2 étapes est un échec ou le nombre maximum de tentatives est atteint, la sélection d'un second type d'accès aléatoire pour essayer d'accéder ;
dans lequel le second type d'accès aléatoire est l'accès aléatoire spécifique de créneau à 4 étapes.

4. Procédé selon l'une quelconque des revendications 1 à 3, dans lequel, au cas où l'accès aléatoire spécifique de créneau à 2 étapes n'est pas configuré, le premier type d'accès aléatoire auquel la priorité est donnée pour la sélection est l'accès aléatoire spécifique de créneau à 4 étapes.

5. Procédé selon l'une quelconque des revendications 1 à 3, dans lequel le premier type d'accès aléatoire auquel la priorité est donnée pour la sélection est l'accès aléatoire patrimonial ou l'accès aléatoire spécifique de créneau à 4 étapes lorsqu'au moins un des cas suivants est respecté :
le dispositif de terminal (300) n'est pas configuré avec une ressource pour l'accès aléatoire spécifique de créneau à 2 étapes ; et
le créneau voulu du terminal n'est pas obtenu ;
dans lequel le premier type d'accès aléatoire auquel la priorité est donnée pour la sélection est l'accès aléatoire patrimonial à 2 étapes dans l'accès aléatoire patrimonial lorsqu'au moins un des cas suivants est respecté :
la qualité de canal est supérieure ou égale à une quatrième valeur seuil ;
le dispositif de terminal (300) est configuré avec une ressource pour l'accès aléatoire patrimonial à 2 étapes.

6. Procédé selon l'une quelconque des revendications 1 à 3, dans lequel la pluralité de types d'accès aléatoire sont sélectionnés dans un ordre descendant de priorité comme suit : l'accès aléatoire spécifique de créneau à 2 étapes, l'accès aléatoire spécifique de créneau à 4 étapes, l'accès aléatoire patrimonial à 2 étapes, et l'accès aléatoire patrimonial à 4 étapes.

7. Dispositif de terminal (300), configuré pour réaliser le procédé selon l'une quelconque des revendications 1 à 6.
